# EUROPÄISCHE PATENTSCHRIFT

(11) **EP 3 608 555 B1**
(45) Veröffentlichungstag und Bekanntmachung des Hinweises auf die Patenterteilung: **20.10.2021**
(21) Anmeldenummer: 19185386.0
(22) Anmeldetag: 10.07.2019
(51) Int. Cl.: F16D 1/116

(54) **ZAHNWELLEN-SYSTEM MIT PASSVERZAHNUNG**
GEARED SHAFT SYSTEM WITH PASSIVE GEARING
SYSTÈME D'ARBRE CANNELÉ POURVU DE DENTURE D'ENGRÈNEMENT

(30) Priorität: 08.08.2018 DE 102018213310
(43) Veröffentlichungstag der Anmeldung: 12.02.2020
(73) Patentinhaber: Volkswagen AG, 38440 Wolfsburg (DE)
(72) Erfinder: Bodeutsch, Dirk, 39629 Bismark OT Meßdorf (DE)

(56) Entgegenhaltungen:
- WO-A1-2010/142408
- DE-A1-102016 111 029
- DE-B3-102009 057 633
- US-A1- 2018 172 079

## Beschreibung

Die Erfindung betrifft ein Zahnwellen-System mit den Merkmalen des Patentanspruchs 1 und ein Montageverfahren für ein Zahnwellen-System mit den Merkmalen des Patentanspruchs 12.

Funktionselemente mit einer Innenverzahnung, wie Geberräder, zum Beispiel von Sensoren, beispielweise für ein Kurbelwellenstellungssignal, und/oder Nocken, können an Zahnwellen durch Aufpressen des Funktionselements auf die Zahnwelle mit einer Überdeckung oder durch Aufschieben des Funktionselements auf die Zahnwelle mit Spiel mit einer anschließenden Fixierung des Funktionselements an der Zahnwelle mittels zusätzlicher Verbindungselemente und/oder mittels Elementen zur axialen Lagerung befestigt werden.

In der DE 10 2016 111 029 A1 wird eine Zahnwellen-System und eine Verfahren zu dessen Herstellung beschrieben. Dabei umfasst das Zahnwellen-System eine Zahnwelle mit einer Außenverzahnung und ein an der Zahnwelle befestigbares oder befestigtes Funktionselement mit einer Innenverzahnung. Dabei weist die Außenverzahnung zwei aneinander angrenzende Verzahnungsabschnitte auf.

Die im Stand der Technik bekannten Zahnwellen-System sind jedoch noch nicht optimal ausgebildet. So können beim Überschieben von Verzahnungen Kräfte auftreten, durch welche die übergeschobenen Verzahnungen beschädigt und das Montageverfahren erschwert werden kann. Zudem kann hierdurch eine Montage über ein, beispielsweise automatisiertes, Kraft-Weg-gesteuertes Aufschieben beziehungsweise Einfädeln, insbesondere im Fall von hohen Fügekräften, beispielsweise für ein Geberrad, und geringen Suchkräften, zum Beispiel für Nockenstücke, zumindest deutlich erschwert, wenn nicht sogar unmöglich werden. Durch die Verwendung von zusätzlichen Verbindungselementen wird die Montage ebenfalls erschwert werden. Axiale Lagerungen erfordern einen hohen Fertigungsaufwand und erschweren daher letztendlich auch die Montage insgesamt.

Aus der DE 10 2009 057 633 B3 ist eine Nockenwelle mit einem Nockenwellengrundkörper bekannt. Auf dem Nockenwellengrundkörper wird mindestens ein Nockenelement befestigt. Innerhalb eines ersten axialen Teilabschnitts des Nockenwellengrundkörpers ist ein Vielzahnprofil ausgebildet. Zwischen einem Nockenwellenendstück und dem ersten axialen Teilabschnitt ist ein zweiter axialer Teilabschnitt mit einem weiteren Vielzahnprofil ausgebildet. Der Durchmesser des zweiten axialen Teilabschnitts ist größer als der Durchmesser des ersten axialen Teilabschnitts. Der erste und der zweite Teilabschnitt sind durch einen verzahnungsfreien Bereich voneinander beabstandet. Ein in einem in Auffädelrichtung nachgelagerten zweiten axialen Teilabschnitt kraftförmig zu befestigendes Nockenelement wird nun über den ersten axialen Teilabschnitt hinweggeschoben und mit seiner Verzahnung kraftformschlüssig auf den im Durchmesser erweiterten zweiten axialen Teilabschnitt aufgepresst. Das Vielzahnprofil im ersten axialen Teilabschnitt bildet eine Passverzahnung und das Vielzahlprofil im zweiten axialen Teilabschnitt bildet eine Passverzahnung. Im ersten axialen Teilabschnitt wird ein zusätzliches schaltbares Nockenelement axial verschieblich angeordnet.

Aus der WO 2010 142 408 A1 ist eine gebaute Nockenwelle bekannt. Auf der Welle der Nockenwelle sind zwei achsparallel ausgerichtete Verzahnungen eingearbeitet, die mit korrespondierenden Verzahnungen in Nabenkörpern formschlüssige Steckverzahnungen bilden. Die Verzahnungen von zwei Nabenkörpern sind als Presspassung ausgebildet. Für zwei weitere Nabenkörper bilden die Steckverzahnungen einen Schiebesitz.

Der Erfindung liegt daher die Aufgabe zu Grunde, das eingangs genannte Zahnwellen-System und Montageverfahren, derart auszugestalten und weiterzubilden, dass eine einfach Montage realisiert werden kann.

Die der Erfindung zugrunde liegende Aufgabe wird durch das Zahnwellen-System mit den Merkmalen des Patentanspruchs 1 und durch das Montageverfahren mit den Merkmalen des Patentanspruchs 10 gelöst.

Das Zahnwellen-System umfasst dabei eine Zahnwelle und ein an der Zahnwelle befestigbares oder befestigtes Funktionselement. Die Zahnwelle weist dabei eine, insbesondere sich parallel zu einer Rotationsachse der Zahnwelle erstreckende, Außenverzahnung auf. Das Funktionselement weist dabei eine Innenverzahnung auf, welche insbesondere ebenfalls sich parallel zu einer beziehungsweise der Rotationsachse der Zahnwelle erstreckend ausgestaltet sein kann. Die Außenverzahnung der Zahnwelle und die Innenverzahnung des Funktionselementes sind dabei ineinander eingreifbar oder eingreifend ausgestaltet.

Erfindungsgemäß weist dabei eine der ineinander eingreifbaren oder eingreifenden Verzahnungen erste Verzahnungslücken und zweite Verzahnungslücken und die andere der ineinander eingreifbaren oder eingreifenden Verzahnungen Pressverzahnungszähne auf. Dabei ist durch einen Eingriff der Pressverzahnungszähne in die ersten Verzahnungslücken eine spielbehaftete Passverzahnung ausbildbar oder ausgebildet. Durch einen Eingriff der Pressverzahnungszähne in die zweiten Verzahnungslücken ist dabei eine Pressverzahnung beziehungsweise eine spielfreie Passverzahnung ausbildbar oder ausgebildet. Erfindungsgemäß ist angrenzend an die ersten und zweiten Verzahnungslücken ein verzahnungsfreier Abschnitt ausgebildet. Dabei ist der verzahnungsfreie Anschnitt sowohl angrenzend an die ersten Verzahnungslücken als auch angrenzend an die zweiten Verzahnungslücken angeordnet und/oder ausgebildet.

In dem Montageverfahren für ein, derartiges, Zahnwellen-System wird, zum Beispiel in einem Verfahrensschritts a), die Innenverzahnung des Funktionselements derart auf die Außenverzahnung der Zahnwelle aufgeschoben, dass die Pressverzahnungszähne in die ersten Verzahnungslücken eingreifen und eine spielbehaftete Passverzahnung ausbilden. Die Innenverzahnung des Funktionselements wird dann, zum Beispiel in einem Verfahrensschritt b), über die Außenverzahnung der Zahnwelle bis über einen beziehungsweise den verzahnungsfreien Abschnitt geschoben. Über dem verzahnungsfreien Abschnitt wird dann, zum Beispiel in einem Verfahrensschritt c), die Innenverzahnung des Funktionselements bezüglich der Außenverzahnung der Zahnwelle gedreht. Dabei kann die Innenverzahnung des Funktionselementes bezüglich der Außenverzahnung der Zahnwelle beispielsweise um eine ungerade Zahl von Lücken und/oder Zähnen, zum Beispiel um eine Lücke und/oder um einen Zahn, gedreht werden. Nach dem Drehen wird dann, zum Beispiel in einem Verfahrensschritt d), die Innenverzahnung des Funktionselements derart auf die Außenverzahnung der Zahnwelle aufgeschoben, aufgepresst, dass die Pressverzahnungszähne in die zweiten Verzahnungslücken eingreifen und eine Pressverzahnung beziehungsweise eine spielfreie Passverzahnung ausbilden.

Beim anfänglichen Aufschieben der Innenverzahnung des Funktionselements auf die Außenverzahnung der Zahnwelle kann durch den Eingriff der Pressverzahnungszähne in die ersten Verzahnungslücken und das Ausbilden der spielbehafteten Passverzahnung der Winkel des Funktionselements ausgerichtet und das Funktionselement auf der Zahnwelle mit Spiel geführt werden. Dies ermöglicht es, das Funktionselement auch über einen längeren verzahnten Bereich annähernd kraftfrei über die Zahnwelle zu schieben. Zudem können durch den Eingriff der Pressverzahnungszähne in die ersten Verzahnungslücken Beschädigungen an den zweiten Verzahnungslücken beim Aufschieben des Funktionselements auf die Zahnwelle vermieden werden. So kann eine hohe Verzahnungsqualität, insbesondere der durch den späteren Eingriff der Pressverzahnungszähne in die zweiten Verzahnungslücken ausgebildeten Pressverzahnung, erzielt werden. Nach dem Überschieben der Innenverzahnung des Funktionselementes über die Außenverzahnung der Zahnwelle kann dann über dem an die verzahnten Bereiche angrenzenden verzahnungsfreien Abschnitt die Innenverzahnung des Funktionselementes bezüglich der Außenverzahnung der Zahnwelle gedreht werden. Durch die durch den verzahnungsfreien Abschnitt ermöglichte Drehbarkeit der Innenverzahnung des Funktionselements bezüglich der Außenverzahnung der Zahnwelle kann wiederum ermöglicht werden, dass die anfänglich in die ersten Verzahnungslücken eingreifenden Pressverzahnungszähne nach dem Drehen in die zweiten Verzahnungslücken eingreifen können. Da der verzahnungsfreie Abschnitt auch an die zweiten Verzahnungslücken angrenzt kann dann nach dem Drehen die Innenverzahnung des Funktionselements, beispielsweise direkt, derart auf die Außenverzahnung der Zahnwelle aufgeschoben, insbesondere aufgepresst, werden, dass die Pressverzahnungszähne in die zweiten Verzahnungslücken eingreifen und eine Pressverzahnung beziehungsweise eine spielfreie Passverzahnung ausbilden. Alternativ kann auch nur ein Verzahnungsabschnitt vorhanden sein, der komplett durchfahren wird, dann das Funktionselement gedreht wird und danach die Innenverzahnung zurück in eine der anderen Zahnlücken der Zahnwelle geschoben wird. Durch den Eingriff der Pressverzahnungszähne in die zweiten Verzahnungslücken und das Ausbilden der Pressverzahnung beziehungsweise der spielfreien Passverzahnung kann dann das Funktionselement auf der Zahnwelle fixiert werden, ohne dass dabei zusätzliche Arbeitsschritte und/oder zusätzliche Verbindungselemente und/oder eine axiale Lagerung erforderlich wären. So kann das System auf einfache Weise montiert werden. Insbesondere kann so auch ein, beispielsweise automatisiertes, Kraft-Weg-gesteuertes Aufschieben des Funktionselements auf die Zahnwelle ermöglicht werden. Zudem kann eine Zahnwelle mit einer derartigen Außenverzahnung und ein Funktionselement mit einer derartigen Innenverzahnung auf einfache Weise, beispielsweise durch Axialformen mit einer Matrix, insbesondere in einem Arbeitsgang, versehen werden.

Der verzahnungsfreie Abschnitt ist, bezogen auf die anfängliche Aufschieberichtung, in welcher die Innenverzahnung des Funktionselements anfänglich auf die Außenverzahnung der Zahnwelle aufgeschoben wird, hinter einem mit den ersten Verzahnungslücken ausgestatteten Verzahnungsabschnitt ausgebildet.

In einer Ausgestaltung weist die Außenverzahnung der Zahnwelle die ersten und zweiten Verzahnungslücken und die Innenverzahnung des Funktionselements die Pressverzahnungszähne aufweist. Dabei kann insbesondere die Zahnwelle (weiterhin) den verzahnungsfreien Abschnitt auf. Der verzahnungsfreie Abschnitt kann dabei insbesondere an der Zahnwelle, beispielsweise angrenzend an die ersten und zweiten Verzahnungslücken der Außenverzahnung der Zahnwelle, ausgebildet sein. Insbesondere kann dabei der verzahnungsfreie Abschnitt, bezogen auf die anfängliche Aufschieberichtung, in welcher die Innenverzahnung des Funktionselements anfänglich auf die Außenverzahnung der Zahnwelle aufgeschoben wird, hinter einem mit den ersten Verzahnungslücken ausgestatteten Verzahnungsabschnitt der Außenverzahnung der Zahnwelle ausgebildet sein.

Insbesondere kann die Zahnwelle jedoch auch zwei oder mehr derartige, insbesondere gemeinsame, Verzahnungsabschnitte aufweisen, welche jeweils erste und zweite, über deren Umfang verteilt angeordnete Verzahnungslücken aufweisen und hinter und/oder zwischen denen jeweils ein verzahnungsfreier Abschnitt angeordnet und/oder ausgebildet ist. So können zwei oder mehr Funktionselemente, beispielsweise durch das Montageverfahren, an der Zahnwelle und/oder in unterschiedlichen Positionen befestigt werden.

Insbesondere können die ersten Verzahnungslücken und die zweite Verzahnungslücken symmetrisch, beispielsweise rotationssymmetrisch, über den Umfang der Verzahnung, zum Beispiel der Außenverzahnung der Zahnwelle beziehungsweise der Innenverzahnung des Funktionselementes, verteilt angeordnet und/oder ausgebildet sein.

In einer speziellen Ausgestaltung sind die ersten Verzahnungslücken und die zweite Verzahnungslücken alternierend zueinander angeordnet und/oder ausgebildet. Dabei kann im Rahmen des Montageverfahrens die Innenverzahnung des Funktionselementes bezüglich der Außenverzahnung der Zahnwelle insbesondere um eine ungerade Anzahl von Lücken und/oder Zähnen, zum Beispiel um eine Lücke und/oder um einen Zahn, gedreht werden. Zum Beispiel kann die mit den ersten und zweiten Verzahnungslücken ausgestatte Verzahnung, beispielsweise die Außenverzahnung der Zahnwelle beziehungsweise die Innenverzahnung des Funktionselements, in Form eines Doppelzahnprofils mit alternierend zueinander angeordneten, ersten und zweiten Verzahnungslücken ausgebildet sein. So kann sowohl ein besonders leichtes Aufschieben der Innenverzahnung des Funktionselements auf die Außenverzahnung der Zahnwelle als auch eine besonders hohe mechanische Stabilität der Fixierung des Funktionselements an der Zahnwelle erzielt werden.

In einer weiteren Ausgestaltung weist die andere der ineinander eingreifbaren oder eingreifenden Verzahnungen, beispielsweise die Innenverzahnung des Funktionselementes beziehungsweise die Außenverzahnung der Zahnwelle, weiterhin Führungsverzahnungszähne, also Pressverzahnungszähne und Führungsverzahnungszähne, auf. Durch einen Eingriff der Führungsverzahnungszähne in die ersten Verzahnungslücken und/oder in die zweiten Verzahnungslücken kann insbesondere eine spielbehaftete Passverzahnung ausbildbar oder ausgebildet sein.

Zum Beispiel kann die Außenverzahnung der Zahnwelle die ersten und zweiten Verzahnungslücken und die Innenverzahnung des Funktionselements die Pressverzahnungszähne und die Führungsverzahnungszähne oder die Innenverzahnung des Funktionselements die ersten und zweiten Verzahnungslücken und die Außenverzahnung der Zahnwelle die Pressverzahnungszähne und die Führungsverzahnungszähne aufweisen.

Im Rahmen des Montageverfahrens kann dabei, zum Beispiel in Verfahrensschritt a), die Innenverzahnung des Funktionselements derart auf die Außenverzahnung der Zahnwelle aufgeschoben werden, dass die Pressverzahnungszähne in die ersten Verzahnungslücken und die Führungsverzahnungszähne in die zweiten Verzahnungslücken eingreifen und eine spielbehaftete Passverzahnung ausbilden. Wie bereits erläutert kann dann, zum Beispiel in Verfahrensschritt b), die Innenverzahnung des Funktionselements über die Außenverzahnung der Zahnwelle bis über den verzahnungsfreien Abschnitt geschoben und, zum Beispiel in Verfahrensschritt c), über dem verzahnungsfreien Abschnitt die Innenverzahnung des Funktionselements bezüglich der Außenverzahnung der Zahnwelle gedreht werden. Nach dem Drehen, zum Beispiel in Verfahrensschritt c), kann dann hierbei die Innenverzahnung des Funktionselements, zum Beispiel in Verfahrensschritt d), derart auf die Außenverzahnung der Zahnwelle aufgeschoben, insbesondere aufgepresst, werden, dass die Pressverzahnungszähne in die zweiten Verzahnungslücken eingreifen und eine Pressverzahnung beziehungsweise eine spielfreie Passverzahnung ausbilden und die Führungsverzahnungszähne in die ersten Verzahnungslücken eingreifen und eine spielbehaftete Passverzahnung ausbilden.

Beim anfänglichen Aufschieben der Innenverzahnung des Funktionselements auf die Außenverzahnung der Zahnwelle kann durch den Eingriff der Führungsverzahnungszähne in die zweiten Verzahnungslücken und das Ausbilden der spielbehafteten Passverzahnung der Winkel des Funktionselements ausgerichtet und das Funktionselement auf der Zahnwelle mit Spiel geführt werden. Dies ermöglicht es ebenfalls, das Funktionselement auch über einen längeren verzahnten Bereich annähernd kraftfrei über die Zahnwelle zu schieben. Zudem können durch den Eingriff der Führungsverzahnungszähne in die zweiten Verzahnungslücken Beschädigungen an den Pressverzahnungszähnen beim Aufschieben des Funktionselements auf die Zahnwelle vermieden werden. So kann eine hohe Verzahnungsqualität, insbesondere der durch den späteren Eingriff der Pressverzahnungszähne in die zweiten Verzahnungslücken ausgebildeten Pressverzahnung, erzielt werden. Nach dem Überschieben der Innenverzahnung des Funktionselementes über die Außenverzahnung der Zahnwelle kann dann über dem an die ersten und zweiten Verzahnungslücken angrenzenden verzahnungsfreien Abschnitt die Innenverzahnung des Funktionselementes bezüglich der Außenverzahnung der Zahnwelle gedreht werden. Durch die durch den verzahnungsfreien Abschnitt ermöglichte Drehbarkeit der Innenverzahnung des Funktionselements bezüglich der Außenverzahnung der Zahnwelle kann wiederum ermöglicht werden, dass die anfänglich in die zweiten Verzahnungslücken eingreifenden Führungsverzahnungszähne nach dem Drehen in die ersten Verzahnungslücken eingreifen können. Da der verzahnungsfreie Abschnitt auch an die ersten Verzahnungslücken angrenzt kann dann nach dem Drehen die Innenverzahnung des Funktionselements, beispielsweise direkt, derart auf die Außenverzahnung der Zahnwelle aufgeschoben werden, dass die Pressverzahnungszähne in die zweiten Verzahnungslücken eingreifen und eine Pressverzahnung beziehungsweise spielbehaftete Passverzahnung ausbilden und dass die Führungsverzahnungszähne in die ersten Verzahnungslücken eingreifen und weiterhin eine spielbehaftete Passverzahnung ausbilden. So kann das System auf einfache Weise montiert werden. Insbesondere kann so auch ein, beispielsweise automatisiertes, Kraft-Weg-gesteuertes Aufschieben des Funktionselements auf die Zahnwelle ermöglicht werden. Zudem kann eine Zahnwelle mit einer derartigen Außenverzahnung und ein Funktionselement mit einer derartigen Innenverzahnung auf einfache Weise, beispielsweise durch Axialformen mit einer Matrix, insbesondere in einem Arbeitsgang, versehen werden.

Die Pressverzahnungszähne und die Führungsverzahnungszähne können beispielsweise in einem, insbesondere gemeinsamen, Verzahnungsabschnitt der Verzahnung, beispielsweise der Innenverzahnung des Funktionselementes beziehungsweise der Außenverzahnung der Zahnwelle, ausgebildet und insbesondere über deren Umfang verteilt angeordnet sein. Insbesondere können die Pressverzahnungszähne und die Führungsverzahnungszähne in demselben Verzahnungsabschnitt, gegebenenfalls in einem einzigen Verzahnungsabschnitt, der Verzahnung, beispielsweise der Innenverzahnung des Funktionselementes beziehungsweise der Außenverzahnung der Zahnwelle, ausgebildet und insbesondere über deren Umfang verteilt angeordnet sein. Dies ermöglicht die axiale Länge der Verzahnung, beispielsweise der Innenverzahnung des Funktionselementes beziehungsweise der Außenverzahnung der Zahnwelle, zur Befestigung des Funktionselementes zu minimieren. So kann beispielsweise die axiale Länge der Zahnwelle verkürzt und/oder Bauraum, beispielsweise für mehrere derartig befestigte Funktionselemente und/oder andere Komponenten, zur Verfügung gestellt werden.

Insbesondere können die Pressverzahnungszähne und die Führungsverzahnungszähne symmetrisch, beispielsweise rotationssymmetrisch, über den Umfang der Verzahnung, zum Beispiel der Innenverzahnung des Funktionselementes beziehungsweise der Außenverzahnung der Zahnwelle, verteilt angeordnet und/oder ausgebildet sein.

In einer speziellen Ausgestaltung sind die Pressverzahnungszähne und die Führungsverzahnungszähne alternierend zueinander angeordnet und/oder ausgebildet. Dabei kann im Rahmen des Montageverfahrens die Innenverzahnung des Funktionselementes bezüglich der Außenverzahnung der Zahnwelle insbesondere um eine ungerade Anzahl von Lücken und/oder Zähnen, zum Beispiel um eine Lücke und/oder um einen Zahn, gedreht werden. Zum Beispiel kann die mit den Pressverzahnungszähnen und die Führungsverzahnungszähnen ausgestatte Verzahnung, beispielsweise die Innenverzahnung des Funktionselements beziehungsweise die Außenverzahnung der Zahnwelle, in Form eines Doppelzahnprofils mit alternierend zueinander angeordneten, Pressverzahnungszähnen und Führungsverzahnungszähne ausgebildet sein. So kann sowohl ein besonders leichtes Aufschieben der Innenverzahnung des Funktionselements auf die Außenverzahnung der Zahnwelle als auch eine besonders hohe mechanische Stabilität der Fixierung des Funktionselements an der Zahnwelle erzielt werden.

Weiterhin kann die mit den ersten und zweiten Verzahnungslücken ausgestattete Verzahnung, beispielsweise die Außenverzahnung der Zahnwelle beziehungsweise die Innenverzahnung des Funktionselementes, zwischen den ersten und/oder zweiten Verzahnungslücken die ersten und/oder zweiten Verzahnungslücken beabstandende und/oder definierende Verzahnungszähne aufweisen.

Analog dazu kann die mit den Pressverzahnungszähnen und gegebenenfalls Führungsverzahnungszähnen ausgestattete Verzahnung, beispielsweise die Innenverzahnung des Funktionselementes beziehungsweise die Außenverzahnung der Zahnwelle, zwischen den Pressverzahnungszähnen und/oder gegebenenfalls Führungsverzahnungszähnen die Pressverzahnungszähne und/oder gegebenenfalls Führungsverzahnungszähne beabstandende und/oder definierende Verzahnungslücken aufweisen.

Die, die ersten und/oder zweiten Verzahnungslücken beabstandenden und/oder definierenden Verzahnungszähne der einen Verzahnung, beispielsweise der Außenverzahnung der Zahnwelle beziehungsweise der Innenverzahnung des Funktionselementes, und die, die Pressverzahnungszähne und/oder gegebenenfalls Führungsverzahnungszähne beabstandenden und/oder definierenden Verzahnungslücken der anderen Verzahnung, beispielsweise der Innenverzahnung des Funktionselementes beziehungsweise der Außenverzahnung der Zahnwelle, können dabei insbesondere ineinander eingreifbar sein beziehungsweise eingreifen. Dabei kann durch einen Eingriff der, die ersten und/oder zweiten Verzahnungslücken beabstandenden und/oder definierenden Verzahnungszähne der einen Verzahnung, beispielsweise der Außenverzahnung der Zahnwelle beziehungsweise der Innenverzahnung des Funktionselementes, in die, die Pressverzahnungszähne und/oder gegebenenfalls Führungsverzahnungszähne beabstandenden und/oder definierenden Verzahnungslücken der anderen Verzahnung, beispielsweise der Innenverzahnung des Funktionselementes beziehungsweise der Außenverzahnung der Zahnwelle, insbesondere eine spielbehaftete Passverzahnung ausbildbar oder ausgebildet sein.

Im Rahmen des Montageverfahrens kann dabei die Innenverzahnung des Funktionselements derart auf die Außenverzahnung der Zahnwelle aufgeschoben werden, dass die Pressverzahnungszähne in die ersten Verzahnungslücken eingreifen (und gegebenenfalls die Führungsverzahnungszähne in die zweiten Verzahnungslücken eingreifen) und die, die ersten und/oder zweiten Verzahnungslücken beabstandenden und/oder definierenden Verzahnungszähne in die, die Pressverzahnungszähne und/oder gegebenenfalls Führungsverzahnungszähne beabstandenden und/oder definierenden Verzahnungslücken eingreifen und, jeweils, eine spielbehaftete Passverzahnung ausbilden. Nach dem Drehen kann dabei die Innenverzahnung des Funktionselements derart auf die Außenverzahnung der Zahnwelle aufgeschoben, aufgepresst, werden, dass die Pressverzahnungszähne in die zweiten Verzahnungslücken eingreifen und eine Pressverzahnung ausbilden (und gegebenenfalls die Führungsverzahnungszähne in die ersten Verzahnungslücken eingreifen und eine spielbehaftete Passverzahnung ausbilden) und die, die ersten und/oder zweiten Verzahnungslücken beabstandenden und/oder definierenden Verzahnungszähne in die, die Pressverzahnungszähne und/oder gegebenenfalls Führungsverzahnungszähne beabstandenden und/oder definierenden Verzahnungslücken eingreifen und eine spielbehaftete Passverzahnung ausbilden.

Die Ausbildung einer spielbehafteten Passverzahnung durch einen Eingriff der Pressverzahnungszähne in die ersten Verzahnungslücken beziehungsweise das Ausbilden einer Pressverzahnung beziehungsweise einer spielfreien Passverzahnung durch einen Eingriff der Pressverzahnungszähne in die zweiten Verzahnungslücken beziehungsweise die Ausbildung einer spielbehafteten Passverzahnung durch einen Eingriff der Führungsverzahnungszähne in die ersten und/oder zweiten Verzahnungslücken beziehungsweise die Ausbildung einer spielbehafteten Passverzahnung durch einen Eingriff der, die ersten und/oder zweiten Verzahnungslücken beabstandenden und/oder definierenden Verzahnungszähne in die, die Pressverzahnungszähne und/oder gegebenenfalls Führungsverzahnungszähne beabstandenden und/oder definierenden Verzahnungslücken kann durch Einstellen von vielen verschiedenen Parametern der ineinander eingreifbaren oder eingreifenden Verzahnungen, beispielsweise durch ein Einstellen des Fußkreisdurchmessers und/oder der Lückenbreite der Lücken und/oder des Kopfkreisdurchmesser und/oder der Zahnhöhe und/oder der Zahndicke und/oder des Flankenwinkels der Zähne und/oder der Form der Lücken und/oder Zähne erzielt werden.

In einer speziellen Ausgestaltung weisen hierfür die ersten Verzahnungslücken der Außenverzahnung der Zahnwelle einen kleineren Fußkreisdurchmesser als die zweiten Verzahnungslücken der Außenverzahnung der Zahnwelle auf. Dabei können die Pressverzahnungszähne der Innenverzahnung des Funktionselements insbesondere einen Kopfkreisdurchmesser aufweisen, welcher größer als der Fußkreisdurchmesser der ersten Verzahnungslücken der Außenverzahnung der Zahnwelle und welcher kleiner oder gleich dem Fußkreisdurchmesser der zweiten Verzahnungslücken der Außenverzahnung der Zahnwelle ist. So kann bewirkt werden, dass die Pressverzahnungszähne beim anfänglichen Aufschieben der Innenverzahnung des Funktionselements auf die Außenverzahnung der Zahnwelle mit Spiel in die ersten Verzahnungslücken eingreifen und eine spielbehaftete Passverzahnung ausbilden und beim späteren Aufschieben des Innenverzahnung des Funktionselementes auf die Außenverzahnung der Zahnwelle nach dem Drehen spiellos in die zweiten Verzahnungslücken eingreifen und eine Pressverzahnung ausbilden und auf diese Weise das Funktionselement an der Zahnwelle fixieren können. Die Führungsverzahnungszähne der Innenverzahnung des Funktionselements können dabei zum Beispiel einen Kopfkreisdurchmesser, welcher größer als der Kopfkreisdurchmesser der Pressverzahnungszähne der Innenverzahnung des Funktionselements und/oder größer als der Fußkreisdurchmesser der ersten Verzahnungslücken der Außenverzahnung der Zahnwelle und/oder größer als der Fußkreisdurchmesser der zweiten Verzahnungslücken der Außenverzahnung der Zahnwelle ist. So kann bewirkt werden, dass die Führungsverzahnungszähne - sowohl beim anfänglichen Aufschieben der Innenverzahnung des Funktionselements auf die Außenverzahnung der Zahnwelle in die zweiten Verzahnungslücken als auch beim späteren Aufschieben der Innenverzahnung des Funktionselements auf die Außenverzahnung der Zahnwelle nach dem Drehen - in die ersten Verzahnungslücken mit Spiel eingreifen und eine spielbehaftete Passverzahnung ausbilden können.

In einer anderen, insbesondere zur vorherigen speziellen Ausgestaltung umgekehrt ausgebildeten, speziellen Ausgestaltung weisen hierfür die ersten Verzahnungslücken der Innenverzahnung des Funktionselements einen größeren Fußkreisdurchmesser als die zweiten Verzahnungslücken der Innenverzahnung des Funktionselementes auf. Dabei können die Pressverzahnungszähne der Außenverzahnung der Zahnwelle einen Kopfkreisdurchmesser aufweisen, welcher kleiner als der Fußkreisdurchmesser der ersten Verzahnungslücken der Innenverzahnung des Funktionselementes und welcher größer oder gleich dem Fußkreisdurchmesser der zweiten Verzahnungslücken der Innenverzahnung des Funktionselementes ist. So kann ebenfalls bewirkt werden, dass die Pressverzahnungszähne beim anfänglichen Aufschieben der Innenverzahnung des Funktionselements auf die Außenverzahnung der Zahnwelle mit Spiel in die ersten Verzahnungslücken eingreifen und eine spielbehaftete Passverzahnung ausbilden und beim späteren Aufschieben des Innenverzahnung des Funktionselementes auf die Außenverzahnung der Zahnwelle nach dem Drehen spiellos in die zweiten Verzahnungslücken eingreifen und eine Pressverzahnung ausbilden und auf diese Weise das Funktionselement an der Zahnwelle fixieren können. Die Führungsverzahnungszähne der Außenverzahnung der Zahnwelle können dabei zum Beispiel einen Kopfkreisdurchmesser aufweisen, welcher kleiner als der Kopfkreisdurchmesser der Pressverzahnungszähne der Außenverzahnung der Zahnwelle und/oder kleiner als der Fußkreisdurchmesser der ersten Verzahnungslücken der Innenverzahnung des Funktionselementes und/oder kleiner als der Fußkreisdurchmesser der zweiten Verzahnungslücken der Innenverzahnung des Funktionselementes ist. So kann ebenfalls bewirkt werden, dass die Führungsverzahnungszähne sowohl beim anfänglichen Aufschieben der Innenverzahnung des Funktionselements auf die Außenverzahnung der Zahnwelle in die zweiten Verzahnungslücken als auch beim späteren Aufschieben der Innenverzahnung des Funktionselements auf die Außenverzahnung der Zahnwelle nach dem Drehen in die ersten Verzahnungslücken mit Spiel eingreifen und eine spielbehaftete Passverzahnung ausbilden können.

Das Funktionselement kann beispielsweise ein Geberrad und/oder ein Nocken und/oder eine Nabe, insbesondere ein Geberrad, beispielsweise für einen Sensor, zum Beispiel für ein Kurbelwellenstellungssignal, umfassen oder sein.

Das Zahnwellen-System kann beispielsweise für ein Kraftfahrzeug ausgelegt sein. Zum Beispiel kann das Zahnwellen-System für ein Kraftfahrzeug mit einem Verbrennungsmotor, beispielsweise mit einem Otto-Motor oder Diesel-Motor, ausgelegt sein.

Die eingangs genannten Nachteile sind daher vermieden und entsprechende Vorteile sind erzielt.

Es gibt nun eine Vielzahl von Möglichkeiten, das erfindungsgemäße Zahnwellen-System und das erfindungsgemäßen Montageverfahren in vorteilhafter Art und Weise auszugestalten und weiterzubilden. Hierfür darf zunächst auf die den Patentansprüchen 1 und 12 nachgeordneten Patentansprüche verwiesen werden. Im Folgenden werden einige bevorzugte Ausgestaltungen des erfindungsgemäßen Zahnwellen-Systems und des erfindungsgemäßen Montageverfahrens anhand der Zeichnung und der dazugehörigen Beschreibung näher erläutert. In der Zeichnung zeigt:

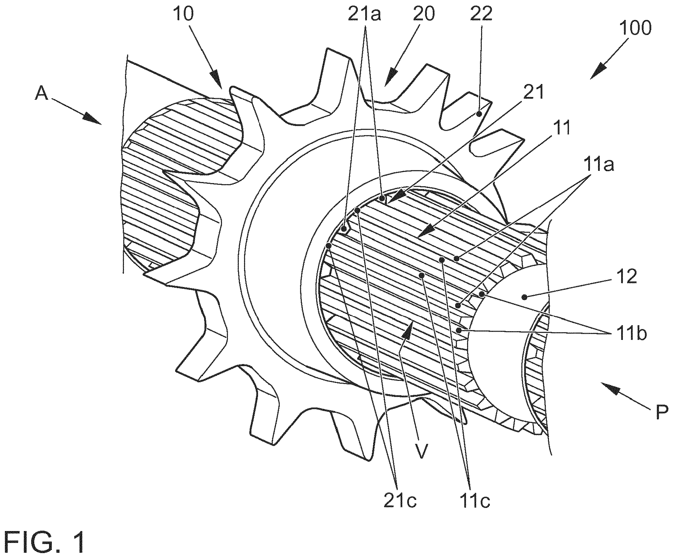

- Fig. 1: in einer schematischen, perspektivischen Ansicht eine erste Ausführungsform eines erfindungsgemäßen Zahnwellen-Systems aus einer Zahnwelle mit einer Außenverzahnung mit einem erste und zweite Verzahnungslücken aufweisenden Verzahnungsabschnitt und aus einem Funktionselement mit einer Innenverzahnung mit einem Pressverzahnungszähne und Führungsverzahnungszähne aufweisenden Verzahnungsabschnitt im montierten Zustand;

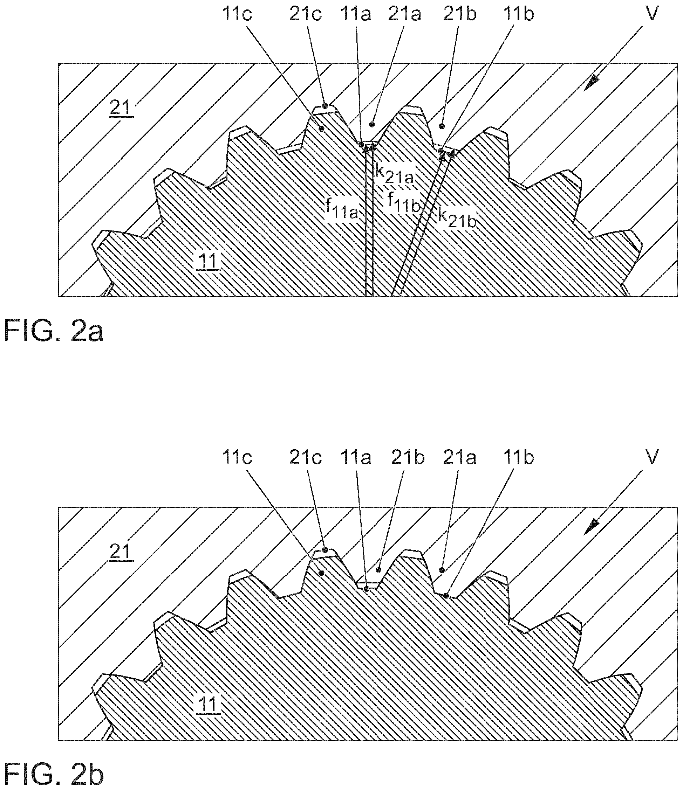

- Fig. 2a,2b: in einem schematischen Querschnitt eine spezielle Ausgestaltung der in Fig. 1 gezeigten ersten Ausführungsform eines erfindungsgemäßen Zahnwellen-Systems während der Montage beziehungsweise im montierten Zustand;

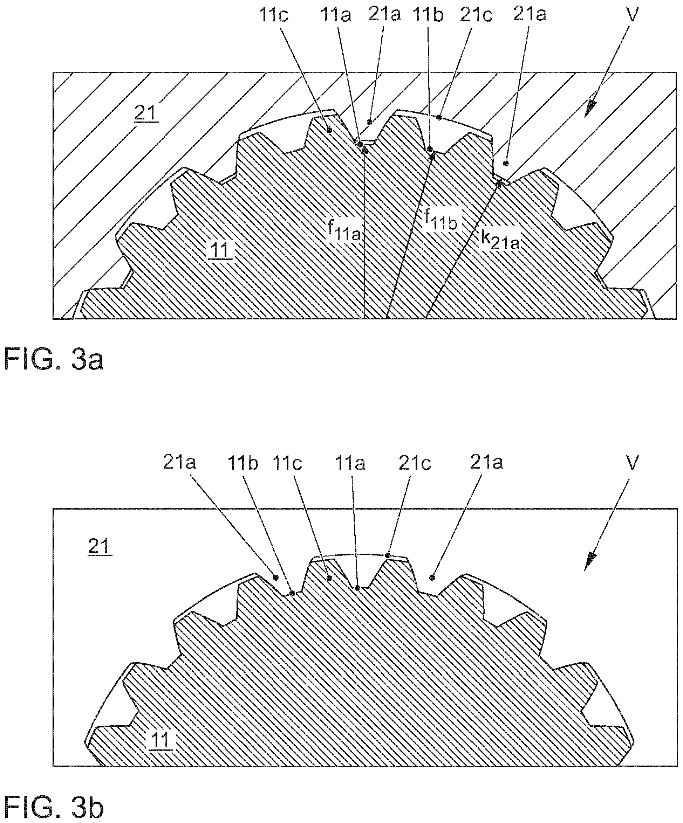

- Fig. 3a,3b: in einem schematischen Querschnitt eine zweite Ausführungsform eines erfindungsgemäßen Zahnwellen-Systems aus einer Zahnwelle mit einer Außenverzahnung mit einem erste und zweite Verzahnungslücken aufweisenden Verzahnungsabschnitt und aus einem Funktionselement mit einer Innenverzahnung mit einem Pressverzahnungszähne aufweisenden Verzahnungsabschnitt während der Montage beziehungsweise im montierten Zustand;

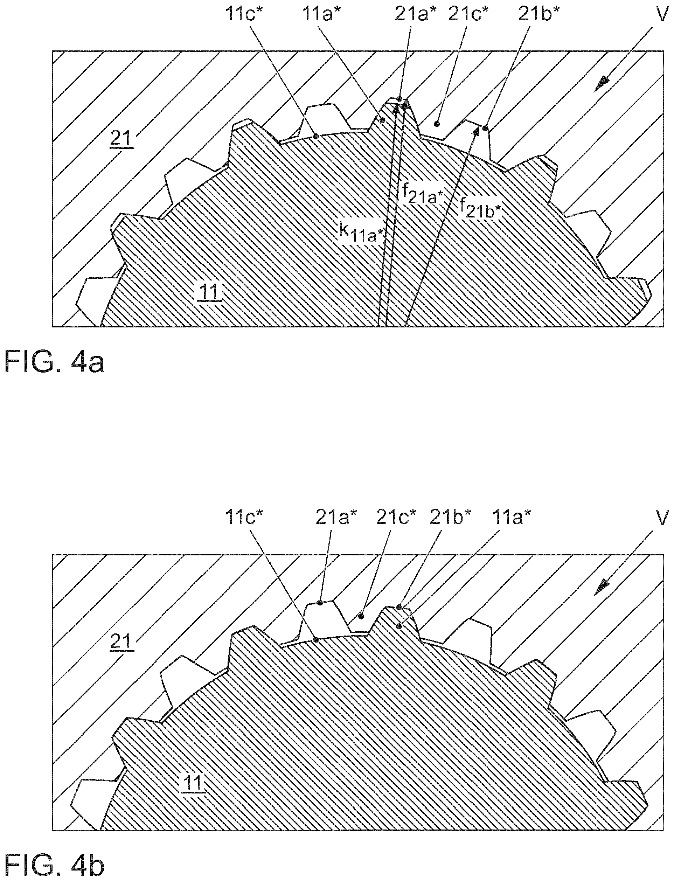

- Fig. 4a,4b: in einem schematischen Querschnitt eine dritte Ausführungsform eines erfindungsgemäßen Zahnwellen-Systems aus einer Zahnwelle mit einer Außenverzahnung mit einem Pressverzahnungszähne aufweisenden Verzahnungsabschnitt und aus einem Funktionselement mit einer Innenverzahnung mit einem erste und zweite Verzahnungslücken aufweisenden Verzahnungsabschnitt während der Montage beziehungsweise im montierten Zustand;

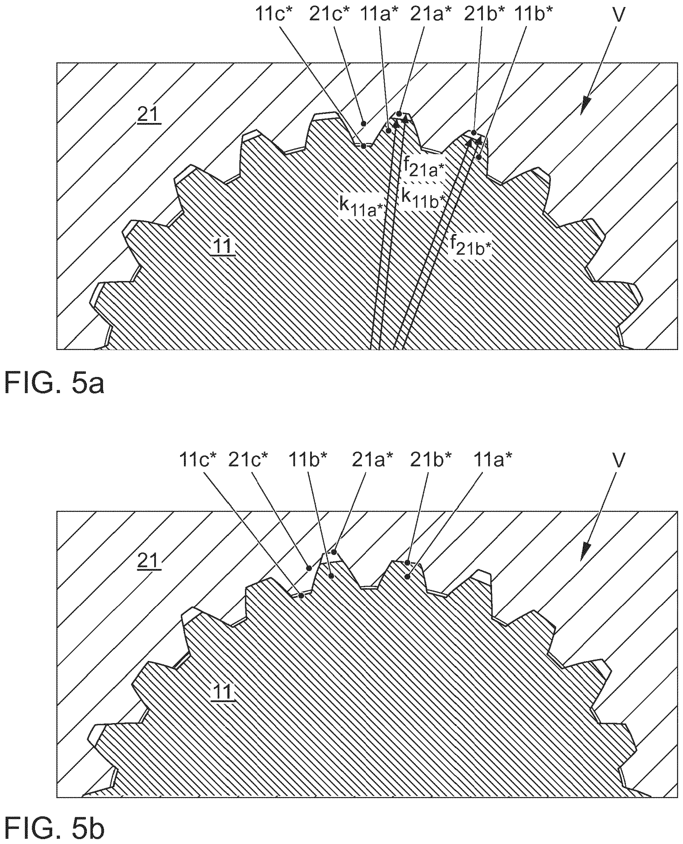

- Fig. 5a,5b: in einem schematischen Querschnitt eine vierte Ausführungsform eines erfindungsgemäßen Zahnwellen-Systems aus einer Zahnwelle mit einer Außenverzahnung mit einem Pressverzahnungszähne und Führungsverzahnungszähnen aufweisenden Verzahnungsabschnitt und aus einem Funktionselement mit einer Innenverzahnung mit einem erste und zweite Verzahnungslücken aufweisenden Verzahnungsabschnitt während der Montage beziehungsweise im montierten Zustand; und

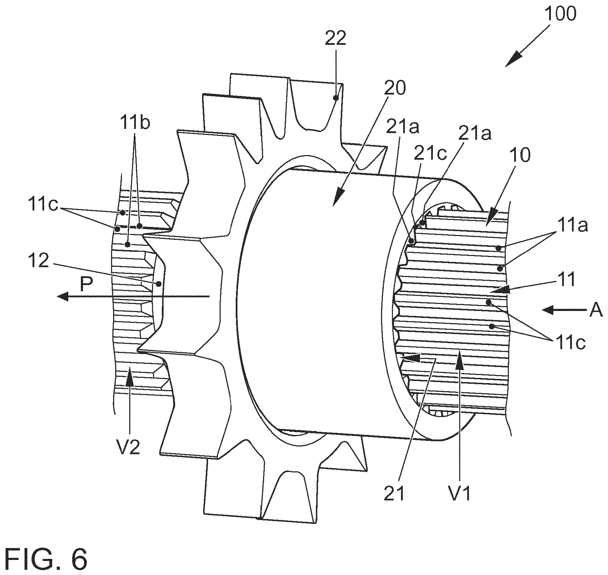

- Fig. 6: in einer schematischen, perspektivischen Ansicht eine fünfte Ausführungsform eines nicht erfindungsgemäßen Zahnwellen-Systems aus einer Zahnwelle mit einer Außenverzahnung mit einem erste Verzahnungslücken aufweisenden ersten Verzahnungsabschnitt, einem zweite Verzahnungslücken aufweisenden zweiten Verzahnungsabschnitt und einem dazwischen ausgebildeten verzahnungsfreien Abschnitt und aus einem Funktionselement mit einer Innenverzahnung mit einem Pressverzahnungszähne aufweisenden Verzahnungsabschnitt während der Montage.

Fig. 1 bis 6 zeigen unterschiedliche Ausführungsformen von Zahnwellen-Systemen 100, beispielsweise für Kraftfahrzeuge, zum Beispiel mit einem Verbrennungsmotor, welche eine Zahnwelle 10 und ein an der Zahnwelle 10 befestigtes Funktionselement 20, zum Beispiel ein Geberrad /oder einen Nocken und/oder eine Nabe, zum Beispiel für einen Sensor, umfassen. Dabei weisen die Zahnwellen 10 jeweils eine sich parallel zu einer Rotationsachse der Zahnwelle 10 erstreckende Außenverzahnung 11 und die Funktionselemente 20 jeweils eine Innenverzahnung 21 auf, wobei jeweils die Außenverzahnung 11 der Zahnwelle 10 und die Innenverzahnung 21 des Funktionselementes 20 ineinander eingreifbar sind oder eingreifen.

In den in Fig. 1 bis 6 gezeigten Ausführungsformen weist jeweils eine der ineinander eingreifbaren oder eingreifenden Verzahnungen 11;21 erste Verzahnungslücken 11a;21a* und zweite Verzahnungslücken 11b;21b* auf. Die andere der ineinander eingreifbaren oder eingreifenden Verzahnungen 21;11 weist dabei zumindest Pressverzahnungszähne 21a;11a* auf. Durch einen Eingriff der Pressverzahnungszähne 21a;11a* in die ersten Verzahnungslücken 11a;21a^{*} ist dabei eine spielbehaftete Passverzahnung ausbildbar oder ausgebildet, wobei durch einen Eingriff der Pressverzahnungszähne 21a; 11a* in die zweiten Verzahnungslücken 11b;21b^{*} eine Pressverzahnung beziehungsweise eine spielfreie Passverzahnung ausbildbar oder ausgebildet ist.

Fig. 1 und 6, zeigen dass dabei angrenzend an die ersten Verzahnungslücken 11a;21a^{*} und zweiten Verzahnungslücken 11b;21b^{*} ein verzahnungsfreier Abschnitt 12 angeordnet und/oder ausgebildet ist.

Die in Fig. 1 bis 6 gezeigten Zahnwellen-Systeme 100 können insbesondere dadurch montiert werden, dass die Innenverzahnung 21 des Funktionselements 20 derart auf die Außenverzahnung 11 der Zahnwelle 10 aufgeschoben wird, dass die Pressverzahnungszähne 21a;11a^{*} in die ersten Verzahnungslücken 11a;21a* eingreifen und eine spielbehaftete Passverzahnung ausbilden. Die Innenverzahnung 21 des Funktionselements 20 wird dann über die Außenverzahnung 11 der Zahnwelle 10 bis über den verzahnungsfreien Abschnitt 12 geschoben. Über dem verzahnungsfreien Abschnitt 12 wird die Innenverzahnung 21 des Funktionselements 20 dann bezüglich der Außenverzahnung 11 der Zahnwelle 10 gedreht. Nach dem Drehen wird die Innenverzahnung 21 des Funktionselements 20 derart auf die Außenverzahnung 11 der Zahnwelle 10 aufgeschoben, dass die Pressverzahnungszähne 21a;11a* in die zweiten Verzahnungslücken 11b;21b^{*} eingreifen und eine Pressverzahnung beziehungsweise eine spielfreie Passverzahnung ausbilden.

In den in Fig. 1 bis 5b gezeigten Ausführungsformen sind die ersten Verzahnungslücken 11a;21a* und die zweiten Verzahnungslücken 11b;21b* in einem gemeinsamen, Verzahnungsabschnitt V der Verzahnung 11;21 ausgebildet und über deren 11;21 Umfang verteilt und alternierend zueinander angeordnet.

Fig. 1 veranschaulicht, dass dabei der verzahnungsfreie Abschnitt 12 angrenzend an und bezogen auf die anfängliche Aufschieberichtung A, in welcher die Innenverzahnung 21 des Funktionselements 20 anfänglich auf die Außenverzahnung 11 der Zahnwelle 10 aufgeschoben wird, hinter dem mit den ersten und zweiten Verzahnungslücken 11a, 11b ausgestatteten gemeinsamen, Verzahnungsabschnitt V der Verzahnung 11 angeordnet und/oder ausgebildet ist.

Die in Fig. 1 bis 5b gezeigten Ausführungsformen können im Rahmen des Montageverfahrens insbesondere dadurch montiert werden, dass nach dem Drehen die Innenverzahnung 21 des Funktionselements 20 in einer, insbesondere zur anfänglichen Aufschieberichtung A, entgegen gesetzten pressverzahnenden Aufschieberichtung P, derart wieder auf die Außenverzahnung 11 der Zahnwelle 10 aufgeschoben, insbesondere aufgepresst, wird, dass die Pressverzahnungszähne 21a;11a* in die zweiten Verzahnungslücken 11b;21b* eingreifen und eine Pressverzahnung beziehungsweise eine spielfreie Passverzahnung ausbilden.

Im Rahmen der in Fig. 1 bis 3b und 6 gezeigten Ausführungsformen weist die Außenverzahnung 11 der Zahnwelle 10 die ersten und zweiten Verzahnungslücken 11a, 11b und die Innenverzahnung 21 des Funktionselements 20 die Pressverzahnungszähne 21a auf. Dabei kann der verzahnungsfreie Abschnitt 12 an der Zahnwelle 10, insbesondere angrenzend an die ersten Verzahnungslücken 11a und zweiten Verzahnungslücken 11b der Außenverzahnung 11 der Zahnwelle 10, ausgebildet sein.

Im Rahmen der in Fig. 4a bis 5b gezeigten Ausführungsformen weist hingegen die Innenverzahnung 21 des Funktionselements 20 die ersten und zweiten Verzahnungslücken 21a*,21b* und die Außenverzahnung 11 der Zahnwelle 10 die Pressverzahnungszähne 11a* auf. Der verzahnungsfreie Abschnitt (nicht dargestellt) kann dabei insbesondere an dem Funktionselement 20, insbesondere angrenzend an die ersten Verzahnungslücken 21a* und die zweiten Verzahnungslücken 21b* der Innenverzahnung 21 des Funktionselementes 20, ausgebildet sein.

Im Rahmen der in Fig. 2a, 2b, 5a und 5b gezeigten Ausführungsformen weist die mit den Pressverzahnungszähnen 21a;11a* ausgestattete Verzahnung 21;11 zusätzlich Führungsverzahnungszähne 21b;11b* auf, welche durch einen Eingriff in die ersten Verzahnungslücken 11a;21a* und durch einen Eingriff in die zweiten Verzahnungslücken 11b;21b* eine spielbehaftete Passverzahnung ausbilden können. Dabei sind die Pressverzahnungszähne 21a;11a* und die Führungsverzahnungszähne 21b;11b* in einem, insbesondere gemeinsamen, Verzahnungsabschnitt der Verzahnung 21;11 ausgebildet und symmetrisch über deren 21;11 Umfang verteilt und alternierend zueinander, beispielsweise in Form eines Doppelzahnprofils, angeordnet. Im Rahmen des Montageverfahrens kann bei diesen Ausführungsformen die Innenverzahnung 21 des Funktionselements 20 insbesondere derart auf die Außenverzahnung 11 der Zahnwelle 10 aufgeschoben werden, dass die Pressverzahnungszähne 21a;11a* in die ersten Verzahnungslücken 11a;21a* und die Führungsverzahnungszähne 21b;11b* in die zweiten Verzahnungslücken 11b;21b* eingreifen und eine spielbehaftete Passverzahnung ausbilden. Nach dem Drehen kann dabei dann die Innenverzahnung 21 des Funktionselements 20 derart auf die Außenverzahnung 11 der Zahnwelle 10 aufgeschoben, insbesondere aufgepresst, werden, dass die Pressverzahnungszähne 21a;11a* in die zweiten Verzahnungslücken 11b;21b* eingreifen und eine Pressverzahnung ausbilden und die Führungsverzahnungszähne 21b;11b* in die ersten Verzahnungslücken 11a;21a* eingreifen und eine spielbehaftete Passverzahnung ausbilden.

Fig. 1 bis 6 zeigen weiterhin, dass die mit den ersten und zweite Verzahnungslücken 11a,11b;21a*,21b* ausgestattete Verzahnung 11;21 zwischen den ersten und zweiten Verzahnungslücken 11a,11b;21 a*,21b* die ersten und/oder zweiten Verzahnungslücken 11a,11b;21a*,21b* beabstandende und/oder definierende Verzahnungszähne 11c;21c* und die mit den Pressverzahnungszähnen 21a;11a* und gegebenenfalls Führungsverzahnungszähnen 21b;11b* ausgestattete Verzahnung 21;11 zwischen den Pressverzahnungszähnen 21a;11a* und gegebenenfalls Führungsverzahnungszähnen 21b;11b* die Pressverzahnungszähne 21a;11a* und gegebenenfalls Führungsverzahnungszähne 21b;11b* beabstandende und/oder definierende Verzahnungslücken 21c;11c* aufweist, welche - insbesondere sowohl beim anfänglichen Aufschieben der Innenverzahnung 21 des Funktionselementes 20 auf die Außenverzahnung 11 der Zahnwelle 10 als auch beim späteren Aufschieben der Innenverzahnung 21 des Funktionselementes 20 auf die Außenverzahnung 11 der Zahnwelle 10 nach dem Drehenineinander eingreifbar sind beziehungsweise eingreifen und - insbesondere in beiden Fälleneine spielbehaftete Passverzahnung ausbilden.

Fig. 1 zeigt eine erste Ausführungsform des Zahnwellen-Systems 100 im montierten Zustand und veranschaulicht, dass im montierten Zustand des Zahnwellen-Systems 100 die Pressverzahnungszähne 21a des Funktionselements 20 in die zweiten Verzahnungslücken 11b der Zahnwelle 10 eingreifen und eine Pressverzahnung ausbilden. Das in Fig. 1 gezeigte montierte Zahnwellen-System 100 kann insbesondere dadurch montiert werden, dass beim anfänglichen Aufschieben der Innenverzahnung 21 des Funktionselements 20 auf die Außenverzahnung 11 der Zahnwelle 10 die Pressverzahnungszähne 21a in die ersten Verzahnungslücken 11a eingreifen und eine spielbehaftete Passverzahnung ausbilden, wobei die Innenverzahnung 21 des Funktionselements 20 dann in der anfänglichen Aufschieberichtung A über die Außenverzahnung 11 der Zahnwelle 10 bis über den verzahnungsfreien Abschnitt 12 geschoben und über dem verzahnungsfreien Abschnitt 12, beispielsweise um einen Zahn 21a,11c und/oder um eine Lücke 11a,11b,21c, gedreht und nach dem Drehen in der, zur anfänglichen Aufschieberichtung A, entgegen gesetzten pressverzahnenden Aufschieberichtung P derart wieder auf die Außenverzahnung 11 der Zahnwelle 10 aufgeschoben wird, dass die Pressverzahnungszähne 21a in die zweiten Verzahnungslücken 11b eingreifen und eine Pressverzahnung ausbilden.

Im Rahmen der in Fig. 1 gezeigten ersten Ausführungsform fehlt jeweils ein Führungsverzahnungszahn 21a des Funktionselements 10, so dass die Führungsverzahnungslücken 21c entsprechend zwei Zähne 11c übergreifen. Zudem deutet Fig. 1 an, dass die ersten Verzahnungslücken 11a der Zahnwelle 10 einen kleineren Fußkreisdurchmesser als die zweiten Verzahnungslücken 11b der Zahnwelle 10 aufweisen. Fig. 1 zeigt weiterhin, dass der verzahnungsfreie Abschnitt an der Zahnwelle 10, angrenzend an die ersten 11a und zweiten 11b Verzahnungslücken der Außenverzahnung 11 der Zahnwelle 10 ausgebildet ist. Darüber hinaus zeigt Fig. 1, dass das Funktionselement 20 weiterhin eine Außenverzahnung 22, beispielsweise zum Abtrieb eines anderen Bauteils und/oder zur Ausgabe eines Signals, aufweisen kann.

Die in Fig. 2a und 2b gezeigte Ausgestaltung des Zahnwellen-Systems 100 unterscheidet sich im Wesentlichen durch die Zahnhöhe und Form der Pressverzahnungszähne 21a und Führungsverzahnungszähne 21a des Funktionselements 20 von der in Fig. 1 gezeigten Ausgestaltung. So sind bei der in Fig. 2a und 2b gezeigten Ausgestaltung die Führungsverzahnungszähne 21b des Funktionselements 10 erhabener und mit einer größeren Zahnhöhe als die Führungsverzahnungszähne 21a des Funktionselements 20 der in Fig. 1 gezeigten Ausgestaltung ausgebildet. So weisen bei der in Fig. 2a und 2b gezeigten Ausgestaltung die Führungsverzahnungszähne 21b des Funktionselements 20 eine Zahnhöhe und einen Kopfkreisdurchmesser in der Größenordnung der Zahnhöhe und des Kopfkreisdurchmessers der Pressverzahnungszähne 21a des Funktionselements 20 auf, wobei die Führungsverzahnungszähne 21b des Funktionselements 20 jedoch eine geringere Zahnhöhe und einen größeren Kopfkreisdurchmesser als die Pressverzahnungszähne 21a des Funktionselements 20 aufweisen.

Fig. 2a, welche das Zahnwellen-System 100, während der Montage zeigt, veranschaulicht, dass beim anfänglichen Aufschieben der Innenverzahnung 21 des Funktionselements 20 auf die Außenverzahnung 11 der Zahnwelle 10 die Pressverzahnungszähne 21a in die ersten Verzahnungslücken 11a und die Führungsverzahnungszähne 21b in die zweiten Verzahnungslücken 11b eingreifen und jeweils eine spielbehaftete Passverzahnung ausbilden. Durch die Führungsverzahnungszähne 21b können dabei vorteilhafterweise auf die Pressverzahnungszähne 21a beim anfänglichen Aufschieben und Überschieben einwirkende Kräfte verringert und dadurch resultierende Beschädigungen an den Pressverzahnungszähnen 21a verringert und auf diese Weise die Verzahnungsqualität, insbesondere der durch den späteren Eingriff der Pressverzahnungszähne 21a in die zweiten Verzahnungslücken 11b ausgebildeten Pressverzahnung, erhöht werden.

Fig. 2b zeigt das bereits in Fig. 2a gezeigte Zahnwellen-System 100 nach der Montage, insbesondere nach dem Drehen der Innenverzahnung 21 des Funktionselements 20 bezüglich der Außenverzahnung 11 der Zahnwelle 10, beispielsweise um einen Zahn beziehungsweise um eine Lücke, über dem verzahnungsfreien Abschnitt (nicht dargestellt) und nach dem Wiederaufschieben und insbesondere Aufpressen der Innenverzahnung 21 des Funktionselements 20 auf die Außenverzahnung 11 der Zahnwelle 10 und veranschaulicht, dass nun die Pressverzahnungszähne 21a in die zweiten Verzahnungslücken 11b eingreifen und eine Pressverzahnung ausbilden, wobei die Führungsverzahnungszähne 21b nun in die ersten Verzahnungslücken 11a eingreifen und eine spielbehaftete Passverzahnung ausbilden.

Die in Fig. 3a und 3b gezeigte zweite Ausführungsform des Zahnwellen-Systems 100 unterscheidet sich im Wesentlichen dadurch von der in Fig. 1 sowie Fig. 2a und 2b gezeigten Ausführungsform, dass die Innenverzahnung 21 des Funktionselementes 20 lediglich Pressverzahnungszähne 21a, jedoch keine Führungsverzahnungszähne 21b, aufweist. Dabei weist die Innenverzahnung 21 des Funktionselements 20 in der in Fig. 3a und 3b gezeigte Ausführungsform halb so viele Zähne, nämlich Pressverzahnungszähne 21a, wie die Außenverzahnung 11 der Zahnwelle 10, nämlich die, die ersten und/oder zweiten Verzahnungslücken 11a, 11b beabstandenden und/oder definierenden Verzahnungszähne 11c, auf und/oder greifen jeweils zwei Zähne der Außenverzahnung 11 der Zahnwelle 10, nämlich jeweils zwei der ersten und/oder zweiten Verzahnungslücken 11a, 11b beabstandenden und/oder definierenden Verzahnungszähne 11c, in eine Lücke 21c, nämlich in eine die Pressverzahnungszähne 21a beabstandenden und/oder definierenden Verzahnungslücken 21c, der Innenverzahnung 21 des Funktionselementes 20 ein.

Fig. 3a, welche das Zahnwellen-System 100 während der Montage zeigt, veranschaulicht, dass die Führung der Innenverzahnung 21 des Funktionselementes 20 auf der Außenverzahnung 11 der Zahnwelle 10 beim anfänglichen Aufschieben der Innenverzahnung 21 des Funktionselementes 20 auf die Außenverzahnung 11 der Zahnwelle 10 bereits lediglich durch die durch den Eingriff der Pressverzahnungszähne 21a in die ersten Verzahnungslücken 11a (und durch den Eingriff der, die ersten und/oder zweiten Verzahnungslücken 11a, 11b beabstandenden und/oder definierenden Verzahnungszähne 11c in die, die Pressverzahnungszähne beabstandenden und/oder definierenden Verzahnungslücken 21c) ausgebildete/n spielbehaftete/n Passverzahnung/en realisiert werden kann. So kann das Zahnwellen-Systems 100 und dessen Montage vereinfacht werden.

Fig. 3b zeigt, das bereits in Fig. 3a gezeigte Zahnwellen-System 100 nach der Montage, insbesondere nach dem Drehen der Innenverzahnung 21 des Funktionselements 20 bezüglich der Außenverzahnung 11 der Zahnwelle 10 über dem verzahnungsfreien Abschnitt (nicht dargestellt) und nach dem Wiederaufschieben und insbesondere Aufpressen der Innenverzahnung 21 des Funktionselements 20 auf die Außenverzahnung 11 der Zahnwelle 10 und veranschaulicht, dass nun die Pressverzahnungszähne 21a in die zweiten Verzahnungslücken 11b eingreifen und eine Pressverzahnung ausbilden, wobei die, die ersten und/oder zweiten Verzahnungslücken 11a, 11b beabstandenden und/oder definierenden Verzahnungszähne 11c weiterhin in die, die Pressverzahnungszähne beabstandenden und/oder definierenden Verzahnungslücken 21c eingreifen und eine spielbehaftete Passverzahnung ausbilden.

Fig. 2a und 3a veranschaulichen, dass die Ausbildung der spielbehaftete Passverzahnung und der Pressverzahnung beispielsweise dadurch realisiert werden kann, dass die ersten Verzahnungslücken 11a der Außenverzahnung 11 der Zahnwelle 10 einen kleineren Fußkreisdurchmesser f₁₁ₐ als die zweiten Verzahnungslücken 11b der Außenverzahnung 11 der Zahnwelle 10 und die Pressverzahnungszähne 21a der Innenverzahnung 21 des Funktionselements 20 einen Kopfkreisdurchmesser k₂₁ₐ aufweisen, welcher größer als der Fußkreisdurchmesser f₁₁ₐ der ersten Verzahnungslücken 11a der Außenverzahnung 11 der Zahnwelle 10 und welcher kleiner oder gleich dem Fußkreisdurchmesser f_{11b} der zweiten Verzahnungslücken 11b der Außenverzahnung 11 der Zahnwelle 10 ist. Darüber hinaus zeigt Fig. 2a, dass dabei die Führungsverzahnungszähne 21b der Innenverzahnung 21 des Funktionselements 20 einen Kopfkreisdurchmesser k_{21b} aufweisen können, welcher größer als der Kopfkreisdurchmesser k₂₁ₐ der Pressverzahnungszähne 21a der Innenverzahnung 21 des Funktionselements 10 und/oder größer als der Fußkreisdurchmesser f₁₁ₐ der ersten Verzahnungslücken 11a der Außenverzahnung 11 der Zahnwelle 10 und/oder größer als der Fußkreisdurchmesser f_{11b} der zweiten Verzahnungslücken 11b der Außenverzahnung 11 der Zahnwelle 10 ist.

Die in Fig. 4a und 4b gezeigte dritte Ausführungsform des Zahnwellen-Systems 100 unterscheidet sich im Wesentlichen dadurch von der in Fig. 3a und 3b gezeigten Ausführungsformen, dass die Innenverzahnung 21 des Funktionselements 20 die ersten und zweiten Verzahnungslücken 21a*,21b* und die Außenverzahnung 11 der Zahnwelle 10 die Pressverzahnungszähne 11a* aufweist. Dabei weist die Innenverzahnung 21 des Funktionselements 20 in der in Fig. 4a und 4b gezeigte Ausführungsform doppelt so viele Zähne 21c*, nämlich erste und/oder zweite Verzahnungslücken 21a*,21b* beabstandende und/oder definierende Verzahnungszähne 21c*, wie die Außenverzahnung 11 der Zahnwelle 10, nämlich Pressverzahnungszähne 11a*, auf und/oder greifen jeweils zwei Zähne der Innenverzahnung 21 des Funktionselementes, nämlich jeweils zwei erste und/oder zweite Verzahnungslücken 21a*,21b* beabstandenden und/oder definierenden Verzahnungszähne 21c*, in eine Lücke 11c*, nämlich in eine die Pressverzahnungszähne 11a* beabstandenden und/oder definierenden Verzahnungslücken 11c*, der Außenverzahnung 11 der Zahnwelle 10 ein.

Fig. 4a, welche das Zahnwellen-System 100 während der Montage zeigt, veranschaulicht, dass die Führung der Innenverzahnung 21 des Funktionselementes 20 auf der Außenverzahnung 11 der Zahnwelle 10 beim anfänglichen Aufschieben der Innenverzahnung 21 des Funktionselementes 20 auf die Außenverzahnung 11 der Zahnwelle 10 bereits lediglich durch die durch den Eingriff der Pressverzahnungszähne 11a* in die ersten Verzahnungslücken 21a* (und durch den Eingriff der, die ersten und/oder zweiten Verzahnungslücken 21a*,21b* beabstandenden und/oder definierenden Verzahnungszähne 21c* in die, die Pressverzahnungszähne 11a* beabstandenden und/oder definierenden Verzahnungslücken 11c*) ausgebildete/n spielbehaftete/n Passverzahnung/en realisiert werden kann. So kann das Zahnwellen-Systems 100 und dessen Montage ebenfalls vereinfacht werden.

Fig. 4b zeigt, das bereits in Fig. 4a gezeigte Zahnwellen-System 100 nach der Montage, insbesondere nach dem Drehen der Innenverzahnung 21 des Funktionselements 20 bezüglich der Außenverzahnung 11 der Zahnwelle 10 über dem verzahnungsfreien Abschnitt (nicht dargestellt) und nach dem Wiederaufschieben und insbesondere Aufpressen der Innenverzahnung 21 des Funktionselements 20 auf die Außenverzahnung 11 der Zahnwelle 10 und veranschaulicht, dass nun die Pressverzahnungszähne 11a* in die zweiten Verzahnungslücken 21b* eingreifen und eine Pressverzahnung ausbilden, wobei die, die ersten und/oder zweiten Verzahnungslücken 21a*,21b* beabstandenden und/oder definierenden Verzahnungszähne 21c* weiterhin in die, die Pressverzahnungszähne 11a* beabstandenden und/oder definierenden Verzahnungslücken 11c* eingreifen und eine spielbehaftete Passverzahnung ausbilden.

Die in Fig. 5a und 5b gezeigte vierte Ausführungsform des Zahnwellen-Systems 100 unterscheidet sich im Wesentlichen dadurch von den in Fig. 1, 2a und 2b gezeigten Ausführungsformen, dass die Innenverzahnung 21 des Funktionselements 20 die ersten und zweiten Verzahnungslücken 21a*,21b* und die Außenverzahnung 11 der Zahnwelle 10 die Pressverzahnungszähne 11a* und die Führungsverzahnungszähne 11b* aufweist.

Fig. 5a, welche das Zahnwellen-System 100 während der Montage zeigt, veranschaulicht, dass die Führung der Innenverzahnung 21 des Funktionselementes 20 auf der Außenverzahnung 11 der Zahnwelle 10 beim anfänglichen Aufschieben der Innenverzahnung 21 des Funktionselementes 20 auf die Außenverzahnung 11 der Zahnwelle 10 sowohl durch die, durch den Eingriff der Pressverzahnungszähne 11a* in die ersten Verzahnungslücken 21a* (und durch den Eingriff der, die ersten und/oder zweiten Verzahnungslücken 21a*,21b* beabstandenden und/oder definierenden Verzahnungszähne 21c* in die, die Pressverzahnungszähne 11a* und/oder Führungsverzahnungszähne 11b* beabstandenden und/oder definierenden Verzahnungslücken 11c*) ausgebildete/n spielbehaftete/n Passverzahnung/en als auch durch die, durch den Eingriff der Führungsverzahnungszähne 11b* in die zweiten Verzahnungslücken 21b* ausgebildete spielbehaftete Passverzahnung realisiert werden kann. Durch die Führungsverzahnungszähne 11b* können dabei vorteilhafterweise auf die Pressverzahnungszähne 11a* beim anfänglichen Aufschieben und Überschieben einwirkende Kräfte verringert und dadurch resultierende Beschädigungen an den Pressverzahnungszähnen 11a* verringert und auf diese Weise die Verzahnungsqualität, insbesondere der durch den späteren Eingriff der Pressverzahnungszähne 11a* in die zweiten Verzahnungslücken 21b* ausgebildeten Pressverzahnung, erhöht werden.

Fig. 5b zeigt das bereits in Fig. 5a gezeigte Zahnwellen-System 100 nach der Montage, insbesondere nach dem Drehen der Innenverzahnung 21 des Funktionselements 20 bezüglich der Außenverzahnung 11 der Zahnwelle 10, beispielsweise um einen Zahn beziehungsweise um eine Lücke, über dem verzahnungsfreien Abschnitt (nicht dargestellt) und nach dem Wiederaufschieben und insbesondere Aufpressen der Innenverzahnung 21 des Funktionselements 20 auf die Außenverzahnung 11 der Zahnwelle 10 und veranschaulicht, dass nun die Pressverzahnungszähne 11a* in die zweiten Verzahnungslücken 21b* eingreifen und eine Pressverzahnung ausbilden, wobei die Führungsverzahnungszähne 11b* in die ersten Verzahnungslücken 21a* eingreifen und weiterhin eine spielbehaftete Passverzahnung ausbilden und wobei die, die ersten und/oder zweiten Verzahnungslücken 21a*,21b* beabstandenden und/oder definierenden Verzahnungszähne 21c* weiterhin in die, die Pressverzahnungszähne 11a* und/oder Führungsverzahnungszähne 11b* beabstandenden und/oder definierenden Verzahnungslücken 11c* eingreifen und eine spielbehaftete Passverzahnung ausbilden.

Fig. 4a und 5a veranschaulichen, dass die Ausbildung der spielbehaftete Passverzahnung und der Pressverzahnung beispielsweise dadurch realisiert werden kann, dass die ersten Verzahnungslücken 21a* der Innenverzahnung 21 des Funktionselements 20 einen größeren Fußkreisdurchmesser f_{21a*} als die zweiten Verzahnungslücken 21b* der Innenverzahnung 21 des Funktionselementes 21 und die Pressverzahnungszähne 11a* der Außenverzahnung 11 der Zahnwelle 10 einen Kopfkreisdurchmesser k_{11a*} aufweisen, welcher kleiner als der Fußkreisdurchmesser f_{21a*} der ersten Verzahnungslücken 21a* der Innenverzahnung 21 des Funktionselementes 20 und welcher größer oder gleich dem Fußkreisdurchmesser f_{21b*} der zweiten Verzahnungslücken 21b* der Innenverzahnung 21 des Funktionselementes 20 ist. Darüber hinaus zeigt Fig. 5a, dass dabei die Führungsverzahnungszähne 11b* der Außenverzahnung 11 der Zahnwelle 10 einen Kopfkreisdurchmesser k_{11b*} aufweisen können, welcher kleiner als der Kopfkreisdurchmesser k_{11a*} der Pressverzahnungszähne 11a* der Außenverzahnung 11 der Zahnwelle 10 und/oder kleiner als der Fußkreisdurchmesser f_{21a*} der ersten Verzahnungslücken 21a* der Innenverzahnung 21 des Funktionselementes 10 und/oder kleiner als der Fußkreisdurchmesser f_{21b*} der zweiten Verzahnungslücken 21b* der Innenverzahnung 21 des Funktionselementes 20 ist.

Fig. 6 zeigt eine fünfte, nicht erfindungsgemäße Ausführungsform des Zahnwellen-Systems 100 während der Montage.

Die in Fig. 6 gezeigte Ausführungsform unterscheidet sich dadurch von den in Fig. 1 bis 5b gezeigten Ausführungsformen, dass die ersten und zweiten Verzahnungslücken 11a,11b;21 a*,21b* nicht in einem, insbesondere gemeinsamen, Verzahnungsabschnitt V der Verzahnung 11;21, sondern in zwei unterschiedlichen Verzahnungsabschnitten V1,V2 der Verzahnung 11 ausgebildet sind.

So sind bei der in Fig. 6 gezeigten Ausführungsform die ersten Verzahnungslücken 11a in einem ersten Verzahnungsabschnitt V1 der Außenverzahnung der Zahnwelle 10 und die zweiten Verzahnungslücken 11b in einem zweiten Verzahnungsabschnitt V2 der Außenverzahnung 11 der Zahnwelle 10 ausgebildet. Dabei ist der verzahnungsfreie Abschnitt 12 zwischen dem ersten Verzahnungsabschnitt V1 und dem zweiten Verzahnungsabschnitt V2 der Außenverzahnung 11 der Zahnwelle 10 angeordnet und grenzt auf diese Weise ebenfalls sowohl an die ersten Verzahnungslücken 11a als auch an die zweiten Verzahnungslücken 11b an.

Ähnlich wie in der in Fig. 3a und 3b gezeigten Ausführungsform, weist bei der in Fig. 6 gezeigten Ausführungsform das Funktionselement 20 lediglich Pressverzahnungszähne 21a auf. Im Unterschied zu der in Fig. 3a und 3b gezeigten Ausführungsform entspricht bei der in Fig. 6 gezeigten Ausführungsform jedoch die Anzahl der Zähne, nämlich der Pressverzahnungszähne 21a, der Innenverzahnung 21 des Funktionselements 20 der Anzahl der ersten Verzahnungslücken 11a des ersten Verzahnungsabschnitts V1 der Außenverzahnung 11 der Zahnwelle 10 und auch der Anzahl der zweiten Verzahnungslücken 11b des zweiten Verzahnungsabschnitts V2 der Außenverzahnung 11 der Zahnwelle 10 und/oder greift jeweils ein Zahn, nämlich jeweils ein Pressverzahnungszahn 11a, der Innenverzahnung 21 des Funktionselementes 20 in eine Verzahnungslücke 11a, 11b, beispielsweise in eine erste Verzahnungslücke 11a des ersten Verzahnungsabschnitts V1 beziehungsweise in eine zweite Verzahnungslücke 11b des zweiten Verzahnungsabschnitts V2, der Außenverzahnung 11 der Zahnwelle 10 ein.

Fig. 6 veranschaulicht, dass ein derartiges Zahnwellen-System 100 dadurch montiert werden kann, dass zunächst die Innenverzahnung 21 des Funktionselements 20 derart auf die Außenverzahnung 11 der Zahnwelle 10 geschoben wird, dass die Pressverzahnungszähne 21a in die ersten Verzahnungslücken 11a des ersten Verzahnungsabschnitts V1 der Außenverzahnung 11 der Zahnwelle 10 unter Ausbildung einer spielbehafteten Passverzahnung eingreifen und die Innenverzahnung 21 des Funktionselements 20 dann über die Außenverzahnung 11 der Zahnwelle 10, insbesondere über den ersten Verzahnungsabschnitt V1 der Außenverzahnung 11 der Zahnwelle 10, bis über den verzahnungsfreien Abschnitt 12 geschoben werden kann. Über dem verzahnungsfreien Abschnitt 12 kann dann die Innenverzahnung 21 des Funktionselements 20 bezüglich der Außenverzahnung 11 der Zahnwelle 10 gedreht werden. Nach dem Drehen kann hierbei dann die Innenverzahnung 21 des Funktionselementes 20 weiter in derselben Richtung beziehungsweise weiter in der anfänglichen Aufschieberichtung A, welche jedoch nun auch als pressverzahnende Aufschieberichtung P bezeichnet werden kann, derart auf die Außenverzahnung 11 der Zahnwelle 10, insbesondere auf den zweiten Verzahnungsabschnitt V2 der Außenverzahnung 11 der Zahnwelle 10, aufgeschoben, insbesondere aufgepresst, werden, dass die Pressverzahnungszähne 21a in die zweiten Verzahnungslücken 11b des zweiten Verzahnungsabschnitts V2 der Außenverzahnung 11 der Zahnwelle 10 eingreifen und eine Pressverzahnung beziehungsweise eine spielfreie Passverzahnung ausbilden. Die radiale Position der ersten 11a und zweiten 11b Verzahnungslücken kann dabei einander entsprechen oder insbesondere voneinander unterschiedlich sein. Durch das Drehen kann beim anfänglichen Aufschieben und beim späteren pressverzahnenden Aufschieben Bauraum in unterschiedlichen radialen Raumrichtungen genutzt werden, wodurch die Montage vereinfacht und insbesondere auch komplexe Systeme und/oder Systeme mit komplexen Bauraumbedingungen montiert werden können.

### Bezugszeichenliste

- 10: Zahnwelle
- 11: Außenverzahnung der Zahnwelle
- 12: verzahnungsfreier Abschnitt der Zahnwelle

- 20: Funktionselement
- 21: Innenverzahnung des Funktionselements
- 22: Außenverzahnung des Funktionselements

- 100: Zahnwellen-System

- A: anfängliche Aufschieberichtung
- P: pressverzahnende Aufschieberichtung

- 11a: erste Verzahnungslücken der Außenverzahnung der Zahnwelle
- 11b: zweite Verzahnungslücken der Außenverzahnung der Zahnwelle
- 11c: erste und/oder zweite Verzahnungslücken beabstandende und/oder definierende Verzahnungszähne der Außenverzahnung der Zahnwelle
- 21a: Pressverzahnungszähne der Innenverzahnung des Funktionselements
- 21b: Führungsverzahnungszähne der Innenverzahnung des Funktionselements
- 21c: Pressverzahnungszähne und/oder Führungsverzahnungszähne beabstandende und/oder definierende Verzahnungslücken der Innenverzahnung des Funktionselements
- f₁₁ₐ: Fußkreisdurchmesser der ersten Verzahnungslücken der Außenverzahnung der Zahnwelle
- f_{11b}: Fußkreisdurchmesser der zweiten Verzahnungslücken der Außenverzahnung der Zahnwelle
- k₂₁ₐ: Kopfkreisdurchmesser der Pressverzahnungszähne der Innenverzahnung des Funktionselements
- k_{21b}: Kopfkreisdurchmesser der Führungsverzahnungszähne der Innenverzahnung des Funktionselements

- 11a*: Pressverzahnungszähne der Außenverzahnung der Zahnwelle
- 11b*: Führungsverzahnungszähne der Außenverzahnung der Zahnwelle
- 11c*: Pressverzahnungszähne und/oder Führungsverzahnungszähne beabstandende und/oder definierende Verzahnungslücken der Außenverzahnung der Zahnwelle
- 21a*: erste Verzahnungslücken der Innenverzahnung des Funktionselements
- 21b*: zweite Verzahnungslücken der Innenverzahnung des Funktionselements
- 21c*: erste und/oder zweite Verzahnungslücken beabstandende und/oder definierende Verzahnungszähne der Innenverzahnung des Funktionselements
- k_{11a*}: Kopfkreisdurchmesser der Pressverzahnungszähne der Außenverzahnung der Zahnwelle
- k_{11b*}: Kopfkreisdurchmesser der Führungsverzahnungszähne der Außenverzahnung der Zahnwelle
- f_{21a*}: Fußkreisdurchmesser der ersten Verzahnungslücken der Innenverzahnung der Funktionselements
- f_{21b*}: Fußkreisdurchmesser der zweiten Verzahnungslücken der Innenverzahnung der Funktionselements

- V: erste und zweite Verzahnungslücken aufweisender Verzahnungsabschnitt
- V1: erste Verzahnungslücken aufweisender erster Verzahnungsabschnitt
- V2: zweite Verzahnungslücken aufweisender zweiter Verzahnungsabschnitt

## Patentansprüche

1. Zahnwellen-System (100), umfassend eine Zahnwelle (10) und ein an der Zahnwelle (10) befestigbares oder befestigtes Funktionselement (20), wobei die Zahnwelle (10) eine sich parallel zu einer Rotationsachse der Zahnwelle (10) erstreckende Außenverzahnung (11) aufweist, wobei das Funktionselement (20) eine Innenverzahnung (21) aufweist und wobei die Außenverzahnung (11) der Zahnwelle (10) und die Innenverzahnung (21) des Funktionselementes (20) ineinander eingreifbar sind oder eingreifen, wobei
- eine der ineinander eingreifbaren oder eingreifenden Verzahnungen (11;21) erste Verzahnungslücken (11a;21a*) und zweite Verzahnungslücken (11b;21b*) und
- die andere der ineinander eingreifbaren oder eingreifenden Verzahnungen (21;11) Pressverzahnungszähne (21a;11a*)
aufweist,
wobei durch einen Eingriff der Pressverzahnungszähne (21a;11a*) in die ersten Verzahnungslücken (11a;21a*) eine spielbehaftete Passverzahnung ausbildbar oder ausgebildet ist, und
wobei durch einen Eingriff der Pressverzahnungszähne (21a;11a*) in die zweiten Verzahnungslücken (11b;21b*) eine Pressverzahnung ausbildbar oder ausgebildet ist und
wobei angrenzend an die ersten und zweiten Verzahnungslücken (11a,11b;21a*,21b*) ein verzahnungsfreier Abschnitt (12) angeordnet und/oder ausgebildet ist, **dadurch gekennzeichnet, dass** die ersten Verzahnungslücken (11a;21a*) und die zweiten Verzahnungslücken (11b;21b*) in einem gemeinsamen, Verzahnungsabschnitt (V) der Verzahnung (11;21) ausgebildet und über deren (11;21) Umfang verteilt angeordnet sind, wobei der verzahnungsfreie Abschnitt (12) angrenzend an den mit den ersten und zweiten Verzahnungslücken (11a,11b;21a*,21b*) ausgestatteten, gemeinsamen, Verzahnungsabschnitt (V) der Verzahnung (11;21) angeordnet und/oder ausgebildet ist.

2. Zahnwellen-System (100) nach einem der vorstehenden Ansprüche, **dadurch gekennzeichnet, dass** die ersten Verzahnungslücken (11a;21a*) und die zweite Verzahnungslücken (11b;21b*) symmetrisch, rotationssymmetrisch, über den Umfang der Verzahnung (11;21) verteilt angeordnet und/oder ausgebildet sind, wobei die ersten Verzahnungslücken (11a;21a*) und die zweite Verzahnungslücken (11b;21b*) alternierend zueinander angeordnet und/oder ausgebildet sind.

3. Zahnwellen-System (100) nach einem der vorstehenden Ansprüche, **dadurch gekennzeichnet, dass** die andere der ineinander eingreifbaren oder eingreifenden Verzahnungen (21;11) Pressverzahnungszähne (21a;11a*)und Führungsverzahnungszähne (21b;11b*) aufweist, wobei durch einen Eingriff der Führungsverzahnungszähne (21b;11b*) in die ersten Verzahnungslücken (11a;21a*) und durch einen Eingriff der Führungsverzahnungszähne (21b;11b*) in die zweiten Verzahnungslücken (11b;21b*) eine spielbehaftete Passverzahnung ausbildbar oder ausgebildet ist, wobei die Pressverzahnungszähne (21a;11a*) und die Führungsverzahnungszähne (21b;11b*) in einem gemeinsamen Verzahnungsabschnitt der Verzahnung (21;11) ausgebildet und symmetrisch, über deren (21; 11) Umfang verteilt und/oder alternierend zueinander angeordnet sind.

4. Zahnwellen-System (100) nach einem der vorstehenden Ansprüche, **dadurch gekennzeichnet, dass** die Außenverzahnung (11) der Zahnwelle (10) die ersten und zweiten Verzahnungslücken (11a, 11b) und die Innenverzahnung (21) des Funktionselements (20) die Pressverzahnungszähne (21a), die Pressverzahnungszähne (21a) und die Führungsverzahnungszähne (21b), aufweist und der verzahnungsfreie Abschnitt (12) an der Zahnwelle (10) ausgebildet ist.

5. Zahnwellen-System (100) nach Anspruch 4, **dadurch gekennzeichnet,**
**dass** die ersten Verzahnungslücken (11a) der Außenverzahnung (11) der Zahnwelle (10) einen kleineren Fußkreisdurchmesser (f₁₁ₐ) als die zweiten Verzahnungslücken (11b) der Außenverzahnung (11) der Zahnwelle (10) aufweisen und die Pressverzahnungszähne (21a) der Innenverzahnung (21) des Funktionselements (20) einen Kopfkreisdurchmesser (k₂₁ₐ) aufweisen, welcher größer als der Fußkreisdurchmesser (f₁₁ₐ) der ersten Verzahnungslücken (11a) der Außenverzahnung (11) der Zahnwelle (10) und welcher kleiner oder gleich dem Fußkreisdurchmesser (f_{11b}) der zweiten Verzahnungslücken (11b) der Außenverzahnung (11) der Zahnwelle (10) ist, und/oder
**dass** die Führungsverzahnungszähne (21b) der Innenverzahnung (21) des Funktionselements (20) einen Kopfkreisdurchmesser (k_{21b}) aufweisen, welcher größer als der Kopfkreisdurchmesser (k₂₁ₐ) der Pressverzahnungszähne (21a) der Innenverzahnung (21) des Funktionselements (10) und/oder größer als der Fußkreisdurchmesser (f₁₁ₐ) der ersten Verzahnungslücken (11a) der Außenverzahnung (11) der Zahnwelle (10) und/oder größer als der Fußkreisdurchmesser (f_{11b}) der zweiten Verzahnungslücken (11b) der Außenverzahnung (11) der Zahnwelle (10) ist.

6. Zahnwellen-System (100) nach einem der Ansprüche 1 bis 3, **dadurch gekennzeichnet, dass** die Innenverzahnung (21) des Funktionselements (20) die ersten und zweiten Verzahnungslücken (21a*,21b*) und die Außenverzahnung (11) der Zahnwelle (10) die Pressverzahnungszähne (11a*), insbesondere die Pressverzahnungszähne (11a*) und die Führungsverzahnungszähne (11b*), aufweist und der verzahnungsfreie Abschnitt (12) an dem Funktionselement (20) ausgebildet ist.

7. Zahnwellen-System (100) nach Anspruch 6, **dadurch gekennzeichnet,**
**dass** die ersten Verzahnungslücken (21a*) der Innenverzahnung (21) des Funktionselements (20) einen größeren Fußkreisdurchmesser (f_{21a*}) als die zweiten Verzahnungslücken (21b*) der Innenverzahnung (21) des Funktionselementes (21) aufweisen und die Pressverzahnungszähne (11a*) der Außenverzahnung (11) der Zahnwelle (10) einen Kopfkreisdurchmesser (k_{11a*}) aufweisen, welcher kleiner als der Fußkreisdurchmesser (f_{21a*}) der ersten Verzahnungslücken (21a*) der Innenverzahnung (21) des Funktionselementes (20) und welcher größer oder gleich dem Fußkreisdurchmesser (f_{21b*}) der zweiten Verzahnungslücken (21b*) der Innenverzahnung (21) des Funktionselementes (20) ist, und/oder dass die Führungsverzahnungszähne (11b*) der Außenverzahnung (11) der Zahnwelle (10) einen Kopfkreisdurchmesser (k_{11b*}) aufweisen, welcher kleiner als der Kopfkreisdurchmesser (k_{11a*}) der Pressverzahnungszähne (11a*) der Außenverzahnung (11) der Zahnwelle (10) und/oder kleiner als der Fußkreisdurchmesser (f_{21a*}) der ersten Verzahnungslücken (21a*) der Innenverzahnung (21) des Funktionselementes (10) und/oder kleiner als der Fußkreisdurchmesser (f_{21b*}) der zweiten Verzahnungslücken (21b*) der Innenverzahnung (21) des Funktionselementes (20) ist.

8. Zahnwellen-System (100) nach einem der vorstehenden Ansprüche, **dadurch gekennzeichnet, dass** das Funktionselement (20) eine Geberrad und/oder ein Nocken und/oder eine Nabe ist.

9. Zahnwellen-System (100) nach einem der vorstehenden Ansprüche, **dadurch gekennzeichnet, dass** das Zahnwellen-System für ein Kraftfahrzeug, insbesondere mit einem Verbrennungsmotor, ausgelegt ist.

10. Montageverfahren für ein Zahnwellen-System (100) nach einem der vorstehenden Ansprüche, **dadurch gekennzeichnet, dass**
- die Innenverzahnung (21) des Funktionselements (20) derart auf die Außenverzahnung (11) der Zahnwelle (10) aufgeschoben wird, dass die Pressverzahnungszähne (21a;11a*) in die ersten Verzahnungslücken (11a;21a*) eingreifen und eine spielbehaftete Passverzahnung ausbilden,
- die Innenverzahnung (21) des Funktionselements (20) über die Außenverzahnung (11) der Zahnwelle (10) bis über den verzahnungsfreien Abschnitt (12) geschoben wird,
- über dem verzahnungsfreien Abschnitt (12) die Innenverzahnung (21) des Funktionselements (20) bezüglich der Außenverzahnung (11) der Zahnwelle (10) gedreht wird, und
- nach dem Drehen die Innenverzahnung (21) des Funktionselements (20) derart auf die Außenverzahnung (11) der Zahnwelle (10) aufgeschoben, insbesondere aufgepresst, wird, dass die Pressverzahnungszähne (21a;11a*) in die zweiten Verzahnungslücken (11b;21b*) eingreifen und eine Pressverzahnung ausbilden, wobei nach dem Drehen die Innenverzahnung (21) des Funktionselements (20) in einer zur anfänglichen Aufschieberichtung, entgegen gesetzten Richtung derart wieder auf die Außenverzahnung (11) der Zahnwelle (10) aufgeschoben wird, dass die Pressverzahnungszähne (21a; 11a*)in die zweiten Verzahnungslücken (11b;21b*) eingreifen und eine Pressverzahnung ausbilden.

11. Montageverfahren nach Anspruch 10 für ein Zahnwellen-System (100) nach einem der vorstehenden Ansprüche, **dadurch gekennzeichnet, dass**
- die Innenverzahnung (21) des Funktionselements (20) derart auf die Außenverzahnung (11) der Zahnwelle (10) aufgeschoben wird, dass die die Führungsverzahnungszähne (21b;11b*) in die zweiten Verzahnungslücken (11b;21b*) eingreifen und eine spielbehaftete Passverzahnung ausbilden,
- nach dem Drehen die Innenverzahnung (21) des Funktionselements (20) derart auf die Außenverzahnung (11) der Zahnwelle (10) aufgeschoben, insbesondere aufgepresst, wird, dass die Führungsverzahnungszähne (21b; 11b*) in die ersten Verzahnungslücken (11a;21a*) eingreifen und eine spielbehaftete Passverzahnung ausbilden.

12. Montageverfahren nach einem der Ansprüche 10 und 11 für ein Zahnwellen-System (100) nach einem der vorstehenden Ansprüche, **dadurch gekennzeichnet, dass** die Innenverzahnung (21) des Funktionselements (20) bezüglich der Außenverzahnung (11) der Zahnwelle (10) um eine ungerade Zahl von Lücken (11a,11b;21a*,21b*) und/oder Zähnen (21a,21b;11a*,11b*), insbesondere um eine Lücke (11a,11b;21a*,21b*) beziehungsweise um einen Zahn (21a,21b;11a*,11b*), gedreht wird.

## Claims

1. Toothed-shaft system (100) comprising a toothed shaft (10) and a functional element (20) which can be, or is, fastened on the toothed shaft (10), wherein the toothed shaft (10) has an outer toothing (11) extending parallel to an axis of rotation of the toothed shaft (10), wherein the functional element (20) has an inner toothing (21), and wherein the outer toothing (11) of the toothed shaft (10) and the inner toothing (21) of the functional element (20) can be made to engage, or do engage, one inside the other, wherein
- one of the interengageable or interengaging toothings (11; 21) has first toothing gaps (11a; 21a*) and second toothing gaps (11b; 21b*), and
- the other one of the interengageable or interengaging toothings (21; 11) has interference-fit-toothing teeth (21a; 11a*),
wherein a clearance-fit toothing can be, or is, formed by engagement of the interference-fit-toothing teeth (21a; 11a*) in the first toothing gaps (11a; 21a*), and
wherein an interference-fit toothing can be, or is, formed by engagement of the interference-fit-toothing teeth (21a; 11a*) in the second toothing gaps (11b; 21b*), and
wherein a toothing-free portion (12) is arranged and/or formed adjacent to the first and second toothing gaps (11a, 11b; 21a*, 21b*), **characterized in that** the first toothing gaps (11a; 21a*) and the second toothing gaps (11b; 21b*) are formed in a common toothing portion (V) of the toothing (11; 21) and are distributed over the circumference of the latter (11; 21), wherein the toothing-free portion (12) is arranged and/or formed adjacent to the common toothing portion (V) of the toothing (11; 21), said common toothing portion being provided with the first and second toothing gaps (11a, 11b; 21a*, 21b*).

2. Toothed-shaft system (100) according to one of the preceding claims, **characterized in** the first toothing gaps (11a; 21a*) and the second toothing gaps (11b; 21b*) are distributed and/or formed symmetrically, rotationally symmetrically, over the circumference of the toothing (11; 21), wherein the first toothing gaps (11a; 21a*) and the second toothing gaps (11b; 21b*) are arranged and/or formed in alternating fashion in relation to one another.

3. Toothed-shaft system (100) according to either of the preceding claims, **characterized in that** the other one of the interengageable or interengaging toothings (21; 11) has interference-fit-toothing teeth (21a; 11a*) and guide-toothing teeth (21b; 11b*), wherein a clearance-fit toothing can be, or is, formed by engagement of the guide-toothing teeth (21b; 11b*) in the first toothing gaps (11a; 21a*) and by engagement of the guide-toothing teeth (21b; 11b*) in the second toothing gaps (11b; 21b*), wherein the interference-fit-toothing teeth (21a; 11a*) and the guide-toothing teeth (21b; 11b*) are formed in a common toothing portion of the toothing (21; 11) and are distributed symmetrically over the circumference of the latter (21; 11) and/or are arranged in alternating fashion in relation to one another.

4. Toothed-shaft system (100) according to one of the preceding claims, **characterized in that** the outer toothing (11) of the toothed shaft (10) has the first and second toothing gaps (11a, 11b) and the inner toothing (21) of the functional element (20) has the interference-fit-toothing teeth (21a), the interference-fit-toothing teeth (21a) and the guide-toothing teeth (21b), and the toothing-free portion (12) is formed on the toothed shaft (10) .

5. Toothed-shaft system (100) according to Claim 4, **characterized**
**in that** the first toothing gaps (11a) of the outer toothing (11) of the toothed shaft (10) have a smaller root diameter (f₁₁ₐ) than the second toothing gaps (11b) of the outer toothing (11) of the toothed shaft (10), and the interference-fit-toothing teeth (21a) of the inner toothing (21) of the functional element (20) have a tip diameter (k₂₁ₐ) which is greater than the root diameter (f₁₁ₐ) of the first toothing gaps (11a) of the outer toothing (11) of the toothed shaft (10) and which is smaller than or equal to the root diameter (f_{11b}) of the second toothing gaps (11b) of the outer toothing (11) of the toothed shaft (10), and/or
**in that** the guide-toothing teeth (21b) of the inner toothing (21) of the functional element (20) have a tip diameter (k_{21b}) which is greater than the tip diameter (k₂₁ₐ) of the interference-fit-toothing teeth (21a) of the inner toothing (21) of the functional element (10) and/or greater than the root diameter (f₁₁ₐ) of the first toothing gaps (11a) of the outer toothing (11) of the toothed shaft (10) and/or greater than the root diameter (f_{11b}) of the second toothing gap (11b) of the outer toothing (11) of the toothed shaft (10).

6. Toothed-shaft system (100) according to one of Claims 1 to 3, **characterized in that** the inner toothing (21) of the functional element (20) has the first and second toothing gaps (21a*, 21b*) and the outer toothing (11) of the toothed shaft (10) has the interference-fit-toothing teeth (11a*), in particular the interference-fit-toothing teeth (11a*) and the guide-toothing teeth (11b*), and the toothing-free portion (12) is formed on the functional element (20).

7. Toothed-shaft system (100) according to Claim 6, **characterized**
**in that** the first toothing gaps (21a*) of the inner toothing (21) of the functional element (20) have a greater root diameter (f_{21a*}) than the second toothing gaps (21b*) of the inner toothing (21) of the functional element (21), and the interference-fit-toothing teeth (11a*) of the outer toothing (11) of the toothed shaft (10) have a tip diameter (k_{11a*}) which is smaller than the root diameter (f₂₁ₐ*) of the first toothing gaps (21a*) of the inner toothing (21) of the functional element (20) and which is greater than or equal to the root diameter (f_{21b*}) of the second toothing gaps (21b*) of the inner toothing (21) of the functional element (20), and/or
**in that** the guide-toothing teeth (11b*) of the outer toothing (11) of the toothed shaft (10) have a tip diameter (k_{11b*}) which is smaller than the tip diameter (k_{11a*}) of the interference-fit-toothing teeth (11a*) of the outer toothing (11) of the toothed shaft (10) and/or smaller than the root diameter (f_{21a*}) of the first toothing gaps (21a*) of the inner toothing (21) of the functional element (10) and/or smaller than the root diameter (f_{21b*}) of the second toothing gaps (21b*) of the inner toothing (21) of the functional element (20).

8. Toothed-shaft system (100) according to one of the preceding claims, **characterized in that** the functional element (20) is a pulse-generator wheel and/or a cam and/or a hub.

9. Toothed-shaft system (100) according to one of the preceding claims, **characterized in that** the toothed-shaft system is designed for a motor vehicle, in particular having an internal combustion engine.

10. Assembly method for a toothed-shaft system (100) according to one of the preceding claims, **characterized in that**
- the inner toothing (21) of the functional element (20) is pushed onto the outer toothing (11) of the toothed shaft (10) such that the interference-fit-toothing teeth (21; 11a*) engage in the first toothing gaps (11a; 21a*) and form a clearance-fit toothing,
- the inner toothing (21) of the functional element (20) is pushed over the outer toothing (11) of the toothed shaft (10) until it is over the toothing-free portion (12) ,
- once in position over the toothing-free portion (12) the inner toothing (21) of the functional element (20) is rotated in relation to the outer toothing (11) of the toothed shaft (10), and
- following the rotation, the inner toothing (21) of the functional element (20) is pushed, in particular pressed, onto the outer toothing (11) of the toothed shaft (10) such that the interference-fit-toothing teeth (21a; 11a*) engage in the second toothing gaps (11b; 21b*) and form an interference-fit toothing, wherein, following the rotation, the inner toothing (21) of the functional element (20) is pushed once again, this time in a direction counter to the initial pushing-on direction, onto the outer toothing (11) of the toothed shaft (10) such that the interference-fit-toothing teeth (21a; 11a*) engage in the second toothing gaps (11b; 21b*) and form an interference-fit toothing.

11. Assembly method according to Claim 10 for a toothed-shaft system (100) according to one of the preceding claims, **characterized in that**
- the inner toothing (21) of the functional element (20) is pushed onto the outer toothing (11) of the toothed shaft (10) such that the guide-toothing teeth (21b; 11b*) engage in the second toothing gaps (11b; 21b*) and form a clearance-fit toothing, and
- following the rotation, the inner toothing (21) of the functional element (20) is pushed, in particular pressed, onto the outer toothing (11) of the toothed shaft (10) such that the guide-toothing teeth (21b; 11b*) engage in the first toothing gaps (11a; 21a*) and form a clearance-fit toothing.

12. Assembly method according to either of Claims 10 and 11 for a toothed-shaft system (100) according to one of the preceding claims, **characterized in that** the inner toothing (21) of the functional element (20) is rotated in relation to the outer toothing (11) of the toothed shaft (10) by an odd number of gaps (11a, 11b; 21a*, 21b*) and/or teeth (21a, 21b; 11a*, 11b*), in particular by one gap (11a, 11b; 21a*, 21b*) and/or by one tooth (21a, 21b; 11a*, 11b*).

## Revendications

1. Système d'arbre cannelé (100), comportant un arbre cannelé (10) et un élément fonctionnel (20) pouvant être fixé ou fixé à l'arbre cannelé (10), l'arbre cannelé (10) comprenant une denture extérieure (11) s'étendant parallèlement à un axe de rotation de l'arbre cannelé (10), l'élément fonctionnel (20) comprenant une denture intérieure (21) et la denture extérieure (11) de l'arbre cannelé (10) et la denture intérieure (21) de l'élément fonctionnel (20) pouvant s'engrener ou s'engrenant l'une dans l'autre,
- l'une des dentures (11 ; 21) pouvant s'engrener ou s'engrenant l'une dans l'autre comprenant des premiers entredents (11a ; 21a*) et des deuxièmes entredents (11b ; 21b*) et
- l'autre des dentures (21 ; 11) pouvant s'engrener ou s'engrenant l'une dans l'autre comprenant des dents de denture à ajustement serré (21a ; 11a*),
une denture à ajustement avec jeu pouvant être réalisée ou étant réalisée par un engrènement des dents de denture à ajustement serré (21a ; 11a*) dans les premiers entredents (11a ; 21a*), et
une denture à ajustement serré pouvant être réalisée ou étant réalisée par un engrènement des dents de denture à ajustement serré (21a ; 11a*) dans les deuxièmes entredents (11b ; 21b*) et
une partie (12) dépourvue de denture étant disposée et/ou réalisée de manière adjacente aux premiers et deuxièmes entredents (11a, 11b ; 21a*, 21b*), **caractérisé en ce que** les premiers entredents (11a ; 21a*) et les deuxièmes entredents (11b ; 21b*) sont réalisés dans une partie commune (V) de la denture (11 ; 21) et sont disposés de manière répartie sur sa (11 ; 21) périphérie, la partie (12) dépourvue de denture étant disposée et/ou réalisée de manière adjacente à la partie (V) de la denture (11 ; 21) dotée des premiers et deuxièmes entredents (11a, 11b ; 21a*, 21b*).

2. Système d'arbre cannelé (100) selon l'une des revendications précédentes, **caractérisé en ce que** les premiers entredents (11a ; 21a*) et les deuxièmes entredents (11b ; 21b*) sont disposés et/ou réalisés de manière répartie symétriquement, avec symétrie de révolution, sur la périphérie de la denture (11 ; 21), les premiers entredents (11a ; 21a*) et les deuxièmes entredents (11b ; 21b*) étant disposés et/ou réalisés de manière alternée les uns par rapport aux autres.

3. Système d'arbre cannelé (100) selon l'une des revendications précédentes, **caractérisé en ce que** l'autre des dentures (21 ; 11) pouvant s'engrener ou s'engrenant l'une dans l'autre comprend des dents de denture à ajustement serré (21a ; 11a*) et des dents de denture de guidage (21b ; 11b*), une denture à ajustement avec jeu pouvant être réalisée ou étant réalisée par un engrènement des dents de denture de guidage (21b ; 11b*) dans les premiers entredents (11a ; 21a*) et par un engrènement des dents de denture de guidage (21b ; 11b*) dans les deuxièmes entredents (11b ; 21b*), les dents de denture à ajustement serré (21a ; 11a*) et les dents de denture de guidage (21b ; 11b*) étant réalisées dans une partie commune de la denture (21 ; 11) et étant disposées symétriquement de manière répartie sur sa (21 ; 11) périphérie et/ou de manière alternée les unes par rapport aux autres.

4. Système d'arbre cannelé (100) selon l'une des revendications précédentes, **caractérisé en ce que** la denture extérieure (11) de l'arbre cannelé (10) comprend les premiers et deuxièmes entredents (11a, 11b) et la denture intérieure (21) de l'élément fonctionnel (20) comprend les dents de denture à ajustement serré (21a), les dents de denture à ajustement serré (21a) et les dents de denture de guidage (21b), et la partie (12) dépourvue de denture est réalisée sur l'arbre cannelé (10) .

5. Système d'arbre cannelé (100) selon la revendication 4, **caractérisé**
**en ce que** les premiers entredents (11a) de la denture extérieure (11) de l'arbre cannelé (10) présentent un diamètre de cercle de pied (f₁₁ₐ) inférieur à celui des deuxièmes entredents (11b) de la denture extérieure (11) de l'arbre cannelé (10) et les dents de denture à ajustement serré (21a) de la denture intérieure (21) de l'élément fonctionnel (20) présentent un diamètre de cercle de tête (k₂₁ₐ), lequel est supérieur au diamètre de cercle de pied (f₁₁ₐ) des premiers entredents (11a) de la denture extérieure (11) de l'arbre cannelé (10) et lequel est inférieur ou égal au diamètre de cercle de pied (f_{11b}) des deuxièmes entredents (11b) de la denture extérieure (11) de l'arbre cannelé (10),
et/ou
**en ce que** les dents de denture de guidage (21b) de la denture intérieure (21) de l'élément fonctionnel (20) présentent un diamètre de cercle de tête (k_{21b}), lequel est supérieur au diamètre de cercle de tête (k₂₁ₐ) des dents de denture à ajustement serré (21a) de la denture intérieure (21) de l'élément fonctionnel (10) et/ou supérieur au diamètre de cercle de pied (f₁₁ₐ) des premiers entredents (11a) de la denture extérieure (11) de l'arbre cannelé (10) et/ou supérieur au diamètre de cercle de pied (f_{11b}) des deuxièmes entredents (11b) de la denture extérieure (11) de l'arbre cannelé (10).

6. Système d'arbre cannelé (100) selon l'une des revendications 1 à 3, **caractérisé en ce que** la denture intérieure (21) de l'élément fonctionnel (20) comprend les premiers et deuxièmes entredents (21a*, 21b*) et la denture extérieure (11) de l'arbre cannelé (10) comprend les dents de denture à ajustement serré (11a*), en particulier les dents de denture à ajustement serré (11a*) et les dents de denture de guidage (11b*), et la partie (12) dépourvue de denture est réalisée sur l'élément fonctionnel (20).

7. Système d'arbre cannelé (100) selon la revendication 6, **caractérisé**
**en ce que** les premiers entredents (21a*) de la denture intérieure (21) de l'élément fonctionnel (20) présentent un diamètre de cercle de pied (f_{21a*}) supérieur à celui des deuxièmes entredents (21b*) de la denture intérieure (21) de l'élément fonctionnel (21) et les dents de denture à ajustement serré (11a*) de la denture extérieure (11) de l'arbre cannelé (10) présentent un diamètre de cercle de tête (k_{11a*}) , lequel est inférieur au diamètre de cercle de pied (f_{21a*}) des premiers entredents (21a*) de la denture intérieure (21) de l'élément fonctionnel (20) et lequel est supérieur ou égal au diamètre de cercle de pied (f_{21b*}) des deuxièmes entredents (21b*) de la denture intérieure (21) de l'élément fonctionnel (20),
et/ou
**en ce que** les dents de denture de guidage (11b*) de la denture extérieure (11) de l'arbre cannelé (10) présentent un diamètre de cercle de tête (k_{11b*}), lequel est inférieur au diamètre de cercle de tête (k_{11a*}) des dents de denture à ajustement serré (11a*) de la denture extérieure (11) de l'arbre cannelé (10) et/ou inférieur au diamètre de cercle de pied (f_{21a*}) des premiers entredents (21a*) de la denture intérieure (21) de l'élément fonctionnel (10) et/ou inférieur au diamètre de cercle de pied (f_{21b*}) des deuxièmes entredents (21b*) de la denture intérieure (21) de l'élément fonctionnel (20) .

8. Système d'arbre cannelé (100) selon l'une des revendications précédentes, **caractérisé en ce que** l'élément fonctionnel (20) est une roue d'impulsions et/ou une came et/ou un moyeu.

9. Système d'arbre cannelé (100) selon l'une des revendications précédentes, **caractérisé en ce que** le système d'arbre cannelé est conçu pour un véhicule automobile, en particulier comportant un moteur à combustion interne.

10. Procédé de montage pour un système d'arbre cannelé (100) selon l'une des revendications précédentes, **caractérisé en ce que**
- la denture intérieure (21) de l'élément fonctionnel (20) est enfilée sur la denture extérieure (11) de l'arbre cannelé (10), de telle sorte que les dents de denture à ajustement serré (21a ; 11a*) s'engrènent dans les premiers entredents (11a ; 21a*) et réalisent une denture à ajustement avec jeu,
- la denture intérieure (21) de l'élément fonctionnel (20) est poussée sur la denture extérieure (11) de l'arbre cannelé (10) jusque sur la partie (12) dépourvue de denture,
- sur la partie (12) dépourvue de denture, la denture intérieure (21) de l'élément fonctionnel (20) est tournée par rapport à la denture extérieure (11) de l'arbre cannelé (10), et
- après la rotation, la denture intérieure (21) de l'élément fonctionnel (20) est enfilée, en particulier pressée, sur la denture extérieure (11) de l'arbre cannelé (10), de telle sorte que les dents de denture à ajustement serré (21a ; 11a*) s'engrènent dans les deuxièmes entredents (11b ; 21b*) et réalisent une denture à ajustement serré, la denture intérieure (21) de l'élément fonctionnel (20) étant, après la rotation, à nouveau enfilée sur la denture extérieure (11) de l'arbre cannelé (10) dans un sens opposé au sens d'enfilage initial de telle sorte que les dents de denture à ajustement serré (21a ; 11a*) s'engrènent dans les deuxièmes entredents (11b ; 21b*) et réalisent une denture à ajustement serré.

11. Procédé de montage selon la revendication 10 pour un système d'arbre cannelé (100) selon l'une des revendications précédentes, **caractérisé en ce que**
- la denture intérieure (21) de l'élément fonctionnel (20) est enfilée sur la denture extérieure (11) de l'arbre cannelé (10) de telle sorte que les dents de denture de guidage (21b ; 11b*) s'engrènent dans les deuxièmes entredents (11b ; 21b*) et réalisent une denture à ajustement avec jeu,
- après la rotation, la denture intérieure (21) de l'élément fonctionnel (20) est enfilée, en particulier pressée, sur la denture extérieure (11) de l'arbre cannelé (10), de telle sorte que les dents de denture de guidage (21b ; 11b*) s'engrènent dans les premiers entredents (11a ; 21a*) et réalisent une denture à ajustement avec jeu.

12. Procédé de montage selon l'une des revendications 10 et 11 pour un système d'arbre cannelé (100) selon l'une des revendications précédentes, **caractérisé en ce que** la denture intérieure (21) de l'élément fonctionnel (20) est tournée par rapport à la denture extérieure (11) de l'arbre cannelé (10) d'un nombre impair d'entredents (11a, 11b ; 21a*, 21b*) et/ou de dents (21a, 21b ; 11a*, 11b*), en particulier d'un entredent (11a, 11b ; 21a*, 21b*) ou d'une dent (21a, 21b ; 11a*, 11b*).
